# EUROPEAN PATENT SPECIFICATION

(11) **EP 2 547 520 B1**
(45) Date of publication and mention of the grant of the patent: **14.06.2017**
(21) Application number: 11711413.2
(22) Date of filing: 15.03.2011
(51) Int. Cl.: B32B 27/08, B29C 47/06

(54) **MULTILAYER ACTIVE OXYGEN BARRIER FILM COMPRISING A PLURALITY OF MICROLAYERS**
MEHRSCHICHTIGER FILM MIT EINER VIELZAHL VON MICROSCHICHTEN ALS AKTIVE SAUERSTOFFBARRIERE
FILM MULTICOUCHE DE BARRIÈRE ACTIVE VIS-À-VIS DE L'OXYGÈNE COMPRENANT UNE PLURALITÉ DE MICROCOUCHES

(30) Priority: 18.03.2010 US 340532 P; 02.03.2011 US 201113038797
(43) Date of publication of application: 23.01.2013
(73) Proprietor: Cryovac, Inc., Duncan, South Carolina 29334 (US)
(72) Inventor: RIVETT, Janet, W., Simpsonville SC 29681 (US); DAYRIT, Richard, M., Simpsonville SC 29681 (US); BECKWITH, Scott, W., Greer SC 29650 (US); SPEER, Drew, Simpsonville SC 29681 (US); EBNER, Cynthia, L., Greer SC 29650 (US)
(74) Representative: Uexküll & Stolberg
(86) International application number: PCT/US2011/028471
(87) International publication number: WO 2011/115961

(56) References cited:
- WO-A1-00/76765
- WO-A1-2010/015402
- WO-A2-2009/095231
- US-A- 6 082 025
- US-A1- 2009 061 057

## Description

This application claims the benefit of U.S. Provisional Application No. 61/340,532, filed March 18, 2010.

### Background of the Invention

The present invention relates to packaging materials of a type employing flexible, polymeric films. More specifically, the invention pertains to multilayer films comprising a plurality of microlayers, the microlayers comprising an active oxygen barrier.

Oxygen barrier films have been made and used for many food and non-food end-use applications for a number of years.

One example of this is vertical form/fill/seal (VFFS) packaging. VFFS systems have proven to be very useful in packaging a wide variety of food and non-food pumpable and/or flowable products. An example of such systems is the ONPACK™ flowable food packaging system marketed by Cryovac/Sealed Air Corporation. The VFFS process is known to those of skill in the art, and described for example in U.S. Patent Nos. 4,506,494 (Shimoyama et al.), 4,589,247 (Tsuruta et al), 4,656,818 (Shimoyama et al.), 4,768,411 (Su), 4,808,010 (Vogan), and 5,467,581 (Everette). Typically in such a process, lay-flat thermoplastic film is advanced over a forming device to form a tube, a longitudinal (vertical) fin or lap seal is made, and a bottom end seal is made by transversely sealing across the tube with heated seal bars. A liquid, flowable, and/or pumpable product, such as a liquid, semiliquid, or paste, with or without particulates therein, is introduced through a central, vertical fill tube to the formed tubular film. Squeeze rollers spaced apart and above the bottom end seal squeeze the filled tube and pinch the walls of the flattened tube together. When a length of tubing of the desired height of the bag has been fed through the squeeze rollers a heat seal is made transversely across the flattened tubing by heat seal bars which clamp and seal the film of the tube therebetween. After the seal bars have been withdrawn the film moves downwardly to be contacted by cooled clamping and severing bars which clamp the film therebetween and are provided with a cutting knife to sever the sealed film at about the midpoint of the seal so that approximately half of the seal will be on the upper part of a tube and the other half on the lower. When the sealing and severing operation is complete, the squeeze rollers are separated to allow a new charge of product to enter the flattened tube after which the aforementioned described process is repeated thus continuously producing vertical form/fill/seal pouches which have a bottom end and top end heat seal closure. The process can be a two-stage process where the creation of a transverse heat seal occurs at one stage in the process, and then, downstream of the first stage, a separate pair of cooling/clamping means contact the just-formed transverse heat seal to cool and thus strengthen the seal. In some VFFS processes, an upper transverse seal of a first pouch, and the lower transverse seal of a following pouch, are made, and the pouches are cut and thereby separated between two portions of the transverse seals, without the need for a separate step to clamp, cool, and cut the seals. A commercial example of an apparatus embodying this more simplified process is the ONPACK™ 2002 VFFS packaging machine marketed by Cryovac/Sealed Air Corporation.

U.S.6,082,025 describes a membrane comprising a microlayer polymeric composite having at least about 10 microlayers which are each individually up to about 100 µm thick and alternating between at least one gas barrier material and at least one elastomeric material. The membrane may be formed into a pressurized bladder or cushioning device.

WO 00/76765A1 discloses a multilayer film comprising a stack of recurring units having at least one extruded microlayer of a first thermoplastic material forming a barrier against oxygen and a total film thickness of between 10 and 2500 µm.

WO 2009/095231A2 describes multilayer, gas-barrier films and sheets suitable for packing applications comprising a microlayer sequence of repeating units, each comprising the sequence A/B/C, wherein A comprises a thermoplastic (co)polyamide, B comprises an ethylene-vinyl alcohol copolymer or a (co)polymer characterized by a low OTR and C is an optional layer comprising thermoplastic (co)polyamide, an outer layer made of other polymers and a tie layer between outer layer and microlayer sequence.

U.S. 2009/0061057A1 is directed to a multilayer film having an active oxygen barrier layer that comprises an oxygen scavenging composition whose oxygen scavenging abilities are enhanced by irradiation.

While useful oxygen barrier films have been developed for VFFS and other end-uses, there remains a need for improvement in oxygen barrier properties of such films, in particular to provide a long-hold function to the film for making packages that have an extended shelf life.

### Summary of the Invention

### Statement of Invention/Embodiments of the Invention

In a first aspect, a multilayer oxygen barrier film comprising:
a) a microlayer section comprising a plurality of microlayers, wherein at least one of the plurality of microlayers comprises a passive oxygen barrier comprising ethylene/vinyl alcohol copolymer, and at least one of the plurality of microlayers comprises a second oxygen barrier; and
b) a bulk layer, wherein each of the microlayers has a thickness that is less than that of the bulk layer;
characterized in that the second oxygen barrier comprises an active oxygen barrier comprising a blend of a thermoplastic resin (a) having carbon-carbon double bonds substantially in its main chain, a transition metal salt (b), and an oxygen barrier polymer (c), wherein
the thermoplastic resin (a) comprises at least one of the units represented by formula (I) and formula II: 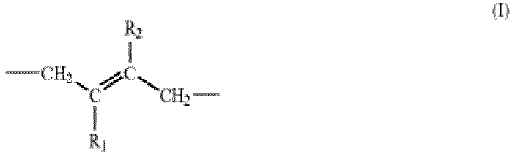 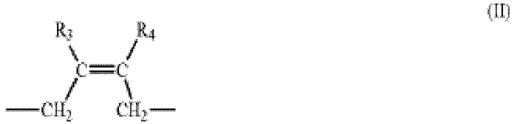 wherein R1, R2, R3 and R4 are the same or different, a hydrogen atom, an alkyl group that may be substituted, an aryl group that may be substituted, an alkylaryl group that may be substituted, -COOR5, -OCOR6, a cyano group or a halogen atom, and R3 and R4 may together form a ring via a methylene group or an oxymethylene group, where R5 and R6 are an alkyl group that may be substituted, an aryl group that may be substituted or an alkylaryl group that may be substituted,
the transition metal salt (b) is selected from the group consisting of an iron salt, a nickel salt, a copper salt, a manganese salt, a cobalt salt, and combinations thereof, and
the oxygen barrier polymer (c) is selected from the group consisting of polyvinyl alcohol, ethylene vinyl alcohol copolymer, polyamide, polyvinyl chloride and its copolymers, polyvinylidene dichloride and its copolymers, polyacrylonitrile and its copolymers, polyethylene naphthenate and its copolymers, polyethylene terephthalate and its copolymers, and combinations thereof.

Optionally, according to various embodiments of the first aspect of the invention:
1. the multilayer film has a thickness of between 25.4 µm (1 mil) and 508 µm (20 mils).
2. the microlayer section comprises at least one microlayer comprising a blend of an active oxygen barrier and a passive oxygen barrier, and at least one microlayer comprising a passive oxygen barrier.
3. the microlayer section comprises a repeating sequence of layers represented by the structure "A/ B", wherein "A" represents a series of microlayers comprising active oxygen barrier; and "B" represents a series of microlayers comprising a passive oxygen barrier.
4. the microlayer section comprises between 10 and 3,000 microlayers, arranged in the repeating sequence of embodiment 3. hereinabove.
5. the multilayer film comprises a second bulk layer, and said microlayer section is positioned between said bulk layer and said second bulk layer.
6. the multilayer film has a free shrink (ASTM D 2732) at 93 °C (200°F) of less than 8% in each of the longitudinal and transverse directions.
7. the multilayer film has a free shrink (ASTM D 2732) at 93 °C (200°F) of at least 8% in each of the longitudinal and transverse directions.
8. the ratio of the thickness of any of the microlayers to the thickness of the bulk layer ranges from 1:2 to 1:30,000.
9. in the microlayer section, the film comprises between 10 and 1,000 microlayers, and at least 20% of the microlayers comprises an active oxygen barrier.
10. in the microlayer section, the film comprises between 10 and 1,000 microlayers, and at least 50% of the microlayers comprises an active oxygen barrier.
11. the microlayer section comprises at least one microlayer comprising an active oxygen barrier within a partially or totally random sequence of microlayers.

In a second aspect, a method of making a multilayer oxygen barrier film comprising:
a. coextruding a plurality of microlayers to form a microlayer section, at least one of the plurality of microlayers comprising a passive oxygen barrier comprising ethylene/vinyl alcohol copolymer, and at least one of the plurality of microlayers comprising a second oxygen barrier;
b. extruding a bulk layer, wherein each of the microlayers has a thickness that is less than that of the bulk layer; and
c. merging said bulk layer and said microlayer section to form a multilayer film;
characterized in that
i) the second oxygen barrier comprises an active oxygen barrier comprising a blend of a thermoplastic resin (a) having carbon-carbon double bonds substantially in its main chain, a transition metal salt (b), and an oxygen barrier polymer (c), wherein the thermoplastic resin (a) comprises at least one of the units represented by formula (I) and formula II: 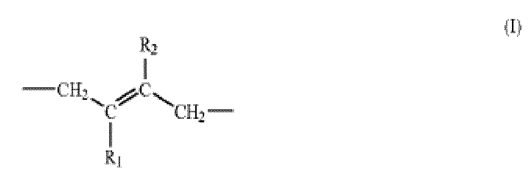 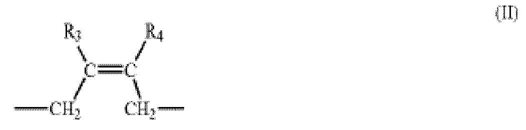 wherein R1, R2, R3 and R4 are the same or different, a hydrogen atom, an alkyl group that may be substituted, an aryl group that may be substituted, an alkylaryl group that may be substituted, -COOR5, -OCOR6, a cyano group or a halogen atom, and R3 and R4 may together form a ring via a methylene group or an oxymethylene group, where R5 and R6 are an alkyl group that may be substituted, an aryl group that may be substituted or an alkylaryl group that may be substituted,
   the transition metal salt (b) is selected from the group consisting of an iron salt, a nickel salt, a copper salt, a manganese salt, a cobalt salt, and combinations thereof, and
   the oxygen barrier polymer (c) is selected from the group consisting of polyvinyl alcohol, ethylene vinyl alcohol copolymer, polyamide, polyvinyl chloride and its copolymers, polyvinylidene dichloride and its copolymers, polyacrylonitrile and its copolymers, polyethylene naphthenate and its copolymers, polyethylene terephthalate and its copolymers, and combinations thereof;
ii) the bulk layer is extruded by directing a first polymer through a distribution plate and onto a primary forming stem, said distribution plate having a fluid inlet and a fluid outlet, the fluid outlet from said plate being in fluid communication with said primary forming stem and structured such that said first polymer is deposited onto said primary forming stem as a bulk layer;
iii) the plurality of microlayers is coextruded to form a microlayer section by directing at least a second polymer through a microlayer assembly, said microlayer assembly comprising a plurality of microlayer distribution plates and a microlayer forming stem, each of said microlayer plates having a fluid inlet and a fluid outlet, the fluid outlet from each of said microlayer plates being in fluid communication with said microlayer forming stem and structured to deposit a microlayer of polymer onto said microlayer forming stem, said microlayer plates being arranged to provide a predetermined order in which the microlayers are deposited onto said microlayer forming stem, thereby forming a substantially unified, microlayered fluid mass;
iv) the bulk layer and the microlayer section are merged to form a multilayer film by directing said microlayered fluid mass from said microlayer forming stem and onto said primary forming stem to merge said microlayered fluid mass with said bulk layer, thereby forming a multilayer film; and
v) the second polymer comprises the second oxygen barrier.

Optionally, according to various embodiments of the second aspect of the invention:
1. the multilayer film has a thickness of between 25.4 µm (1 mil) and 508 µm (20 mils).
2. the microlayer section comprises at least one microlayer comprising a blend of an active oxygen barrier and a passive oxygen barrier, and at least one microlayer comprising a passive oxygen barrier.
3. the microlayer section comprises a repeating sequence of layers represented by the structure "A/B", wherein "A" represents a microlayer comprising active oxygen barrier; and "B" represents a microlayer comprising a passive oxygen barrier.
4. the microlayer section comprises between 10 and 3,000 microlayers, arranged in the repeating sequence of embodiment 3. hereinabove.
5. the multilayer film comprises a second bulk layer, and said microlayer section is positioned between said bulk layer and said second bulk layer.
6. the multilayer film has a free shrink (ASTM D 2732) at 93 °C (200°F) of less than 8% in each of the longitudinal and transverse directions.
7. the multilayer film has a free shrink (ASTM D 2732) at 93 °C (200°F) of at least 8% in each of the longitudinal and transverse directions.
8. the ratio of the thickness of any of the microlayers to the thickness of the bulk layer ranges from 1:2 to 1:30,000.
9. in the microlayer section, the film comprises between 10 and 1,000 microlayers, and at least 20% of the microlayers comprises an active oxygen barrier.
10. in the microlayer section, the film comprises between 10 and 1,000 microlayers, and at least 50% of the microlayers comprises an active oxygen barrier.
11. the microlayer section comprises at least one microlayer comprising an active oxygen barrier within a partially or totally random sequence of microlayers.

These and other aspects and features of the invention may be better understood with reference to the following description and accompanying drawings.

### Brief Description of the Drawings

FIG. 1 is a schematic view of a system 10 in accordance with the present invention for coextruding a multilayer film;
FIG. 2 is a cross-sectional view of the die 12 shown in FIG. 1;
FIG. 3 is a plan view one of the microlayer plates 48 in die 12;
FIG. 4 is a cross-sectional view of the microlayer plate 48 taken along line 4-4 of FIG. 3;
FIG. 5 is a magnified, cross-sectional view of die 12, showing the combined flows from the microlayer plates 48 and distribution plates 32;
FIG. 6 is a cross-sectional view of a multilayer active oxygen barrier film that can be produced from die 12 as shown in FIG. 2; and
FIG. 7 is a cross-sectional view of an alternative multilayer active oxygen barrier film that can be produced from die 12 as shown in FIG. 2.

### Definitions

"Active oxygen barrier" ("AOB") herein refers to a composition that is a blend of a thermoplastic resin (a) having carbon-carbon double bonds substantially in its main chain, a transition metal salt (b), and an oxygen barrier polymer (c). In some embodiments the active oxygen barrier composition may also include a compatibilizer (d). The oxygen barrier polymer may comprise about 70 to 99 % by weight of the composition, and the thermoplastic resin having carbon-carbon double bonds typically comprises from about 1 to 30 weight % of the polymeric portion of the composition. When present, the compatibilizer typically comprises about 0.1 to 29 weight % of the total polymeric portion of the composition. Compositions comprising an active oxygen barrier microlayer are discussed in greater detail below.

"Aseptic" herein refers to a process wherein a sterilized container or packaging material, e.g. a pre-made pouch or a pouch constructed in a vertical form/fill/seal process, is filled with a sterilized food product, in a hygienic environment. The food product is thus rendered shelf stable in normal nonrefrigerated conditions. "Aseptic" is also used herein to refer to the resulting filled and closed package. The package or packaging material, and the food product, are typically separately sterilized before filling.

"Ethylene/alpha-olefin copolymer" (EAO) herein refers to copolymers of ethylene with one or more comonomers selected from C₃ to C₁₀ alpha-olefins such as propene, butene-1, hexene-1, octene-1, etc. in which the molecules of the copolymers comprise long polymer chains with relatively few side chain branches arising from the alpha-olefin which was reacted with ethylene. This molecular structure is to be contrasted with conventional high pressure low or medium density polyethylenes which are highly branched with respect to EAOs and which high pressure polyethylenes contain both long chain and short chain branches. EAO includes such heterogeneous materials as linear medium density polyethylene (LMDPE), linear low density polyethylene (LLDPE), and very low and ultra low density polyethylene (VLDPE and ULDPE), such as DOWLEX™ and ATTANE™ resins supplied by Dow, and ESCORENE™ resins supplied by Exxon; as well as linear homogeneous ethylene/alpha olefin copolymers (HEAO) such as TAFMER™ resins supplied by Mitsui Petrochemical Corporation, EXACT™ and EXCEED™ resins supplied by Exxon, long chain branched (HEAO) AFFINITY™ resins and ELITE™ resins supplied by the Dow Chemical Company, ENGAGE™ resins supplied by DuPont Dow Elastomers, and SURPASS™ resins supplied by Nova Chemicals.

"Ethylene homopolymer or copolymer" herein refers to ethylene homopolymer such as low density polyethylene (LDPE); ethylene/alpha olefin copolymer such as those defined herein; ethylene/vinyl acetate copolymer (EVA); ethylene/alkyl acrylate copolymer; ethylene/ (meth) acrylic acid copolymer; or ionomer resin.

"Ethylene/ vinyl alcohol copolymer" (EVOH) herein refers to an ethylene copolymer made up of repeating units of ethylene and vinyl alcohol, typically made by hydrolyzing an ethylene-vinyl acetate copolymer. As used herein, "EVOH" does not include, and specifically excludes, an oxygen scavenging moiety, or a thermoplastic resin having carbon-carbon double bonds.

"High density polyethylene" is an ethylene homopolymer or copolymer with a density of 0.940 g/cc or higher.

"Internal" herein refers to a layer bounded on both of its major surfaces with another layer.

"Olefinic" and the like herein refer to a polymer or copolymer derived at least in part from an olefinic monomer.

"OTR" herein refers to oxygen transmission rate as defined herein.

"Oxygen barrier polymer" herein refers to a polymeric material having an oxygen permeability of less than 500 cm³ O₂/ / m² • day • atmosphere (tested at 25.4 µm (1 mil) thick and at 25 °C according to ASTM D3985), such as less than 100, less than 50 and less than 25 cm³ O₂ / m² • day • atmosphere such as less than 10, less than 5, and less than 1 cm³ O₂ / m² • day • atmosphere. Examples of such polymeric materials are ethylene/vinyl alcohol copolymer (EVOH), polyvinylidene dichloride (PVDC), vinylidene chloride/ methyl acrylate copolymer, polyamide, amorphous polyamide and polyester.

"Passive oxygen barrier" herein refers to an oxygen barrier polymer as defined above, and one that does not include, and specifically excludes, an oxygen scavenging moiety, or a thermoplastic resin having carbon-carbon double bonds.

"Polyamide" herein refers to polymers having amide linkages along the molecular chain, and preferably to synthetic polyamides such as nylons.

"Polymer" and the like herein mean a homopolymer, but also copolymers thereof, including bispolymers, terpolymers, etc.

"Polypropylene" (PP) is a propylene homopolymer, or copolymer having greater than 50 mole percent propylene prepared by conventional heterogeneous Ziegler-Natta type initiators or by single site catalysis. Propylene copolymers are typically prepared with ethylene or butene comonomers.

All compositional percentages used herein are presented on a "by weight" basis, unless designated otherwise; except that compositional percentages for the ethylene content of EVOH herein is given on a mole % basis.

### Detailed Description of the Invention

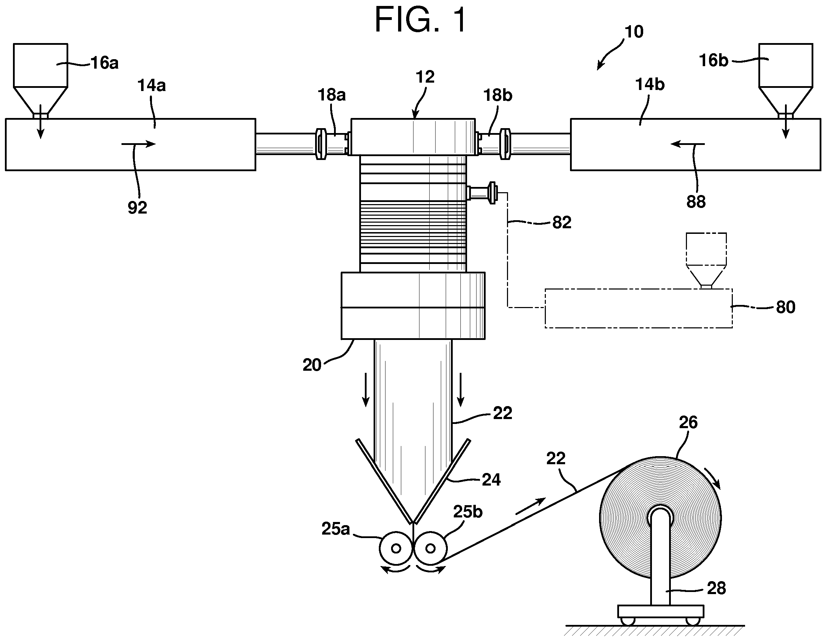

FIG. 1 schematically illustrates a system 10 in accordance with the present invention for coextruding a plurality of fluid layers. Such fluid layers typically comprise fluidized polymeric layers, which are in a fluid state by virtue of being molten, i.e., maintained at a temperature above the melting point of the polymer(s) used in each layer. Copending US patent application serial no. 12/284510, filed September 23, 2008, entitled "Die, System, and Method for Coextruding a Plurality of Fluid Layers", said patent application assigned to a common assignee with the present application discloses a system that produces a film with microlayers.

System 10 generally includes a die 12 and one or more extruders 14a and 14b in fluid communication with the die 12 to supply one or more fluidized polymers to the die. As is conventional, the polymeric materials may be supplied to the extruders 14a, b in the solid-state, e.g., in the form of pellets or flakes, via respective hoppers 16a, b. Extruders 14a, b are maintained at a temperature sufficient to convert the solid-state polymer to a molten state, and internal screws within the extruders (not shown) move the molten polymer into and through die 12 via respective pipes 18a, b. As will be explained in further detail below, within die 12, the molten polymer is converted into thin film layers, and each of the layers are superimposed, combined together, and expelled from the die at discharge end 20, i.e., "coextruded," to form a tubular, multilayer film 22. Upon emergence from the die 12 at discharge end 20, the tubular, multilayer film 22 is exposed to ambient air or a similar environment having a temperature sufficiently low to cause the molten polymer from which the film is formed to transition from a liquid state to a solid state. Additional cooling/quenching of the film may be achieved by providing a liquid quench bath (not shown), and then directing the film through such bath. The solidified tubular film 22 is then collapsed by a convergence device 24, e.g., a V-shaped guide as shown, which may contain an array of rollers to facilitate the passage of film 22 therethrough. A pair of counter-rotating drive rollers 25a, b may be employed as shown to pull the film 22 through the convergence device 24. The resultant collapsed tubular film 22 may then be wound into a roll 26 by a film winding device 28 as shown. The film 22 on roll 26 may subsequently be unwound for use, e.g., for packaging, or for further processing, e.g., stretch-orientation, irradiation, or other conventional film-processing techniques, which are used to impart desired properties as necessary for the intended end-use applications for the film.

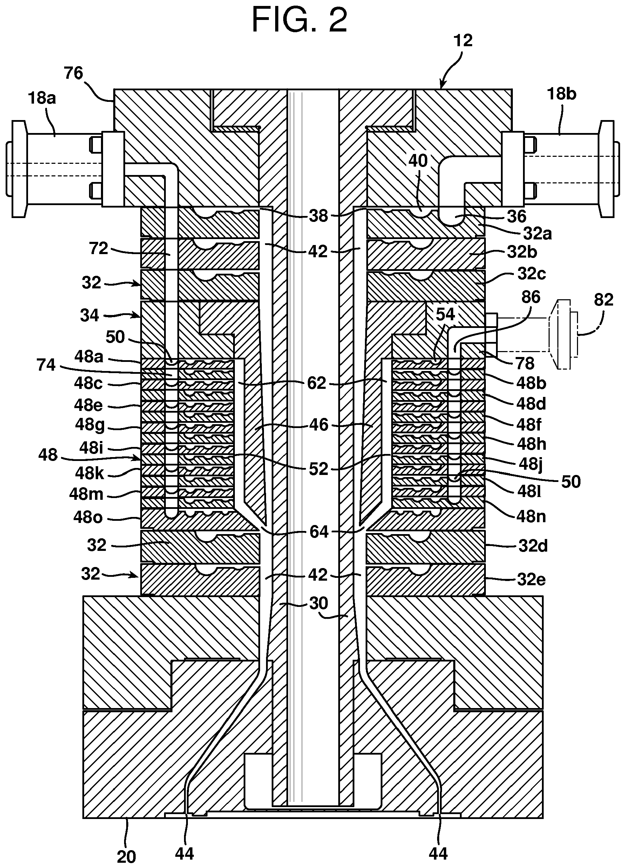

Referring now to FIG. 2, die 12 will be described in further detail. As noted above, die 12 is adapted to coextrude a plurality of fluid layers, and generally includes a primary forming stem 30, one or more distribution plates 32, and a microlayer assembly 34. In the presently illustrated die, five distribution plates 32 are included, as individually indicated by the reference numerals 32a-e. A greater or lesser number of distribution plates 32 may be included as desired. The number of distribution plates in die 12 may range, e.g., from one to twenty, or even more then twenty if desired.

Each of the distribution plates 32 has a fluid inlet 36 and a fluid outlet 38 (the fluid inlet is only shown in plate 32a). The fluid outlet 38 from each of the distribution plates 32 is in fluid communication with the primary forming stem 30, and also is structured to deposit a layer of fluid onto the primary forming stem. The distribution plates 32 may be constructed as described in U.S. Pat. No. 5,076,776. As described in the '776 patent, the distribution plates 32 may have one or more spiral-shaped fluid-flow channels 40 to direct fluid from the fluid inlet 36 and onto the primary forming stem 30 via the fluid outlet 38. As the fluid proceeds along the channel 40, the channel becomes progressively shallower such that the fluid is forced to assume a progressively thinner profile. The fluid outlet 38 generally provides a relatively narrow fluid-flow passage such that the fluid flowing out of the plate has a final desired thickness corresponding to the thickness of the fluid outlet 38. Other channel configurations may also be employed, e.g., a toroid-shaped channel; an asymmetrical toroid, e.g., as disclosed in U.S. Pat. No. 4,832,589; a heart-shaped channel; a helical-shaped channel, e.g., on a conical-shaped plate as disclosed in U.S. Pat. No. 6,409,953, etc. The channel(s) may have a semi-circular or semi-oval cross-section as shown, or may have a fuller shape, such as an oval or circular cross-sectional shape.

Distribution plates 32 may have a generally annular shape such that the fluid outlet 38 forms a generally ring-like structure, which forces fluid flowing through the plate to assume a ring-like form. Such ring-like structure of fluid outlet 38, in combination with its proximity to the primary forming stem 30, causes the fluid flowing through the plate 32 to assume a cylindrical shape as the fluid is deposited onto the stem 30. Each flow of fluid from each of the distribution plates 32 thus forms a distinct cylindrical "bulk" layer on the primary forming stem 30, i.e. layers that have greater bulk, e.g., thickness, than those formed from the microlayer assembly 34 (as described below).

The fluid outlets 38 of the distribution plates 32 are spaced from the primary forming stem 30 to form an annular passage 42. The extent of such spacing is sufficient to accommodate the volume of the concentric fluid layers flowing along the forming stem 30.

The order in which the distribution plates 32 are arranged in die 12 determines the order in which the fluidized bulk layers are deposited onto the primary forming stem 30. For example, if all five distribution plates 32a-e are supplied with fluid, fluid from plate 32a will be the first to be deposited onto primary forming stem 30 such that such fluid will be in direct contact with the stem 30. The next bulk layer to be deposited onto the forming stem would be from distribution plate 32b. This layer will be deposited onto the fluid layer from plate 32a. Next, fluid from plate 32c will be deposited on top of the bulk layer from plate 32b. If microlayer assembly 34 were not present in the die, the next bulk layer to be deposited would be from distribution plate 32d, which would be layered on top of the bulk layer from plate 32c. Finally, the last and, therefore, outermost bulk layer to be deposited would be from plate 32e. In this example (again, ignoring the microlayer assembly 34), the resultant tubular film 22 that would emerge from the die would have five distinct bulk layers, which would be arranged as five concentric cylinders bonded together.

Accordingly, it may be appreciated that the fluid layers from the distribution plates 32 are deposited onto the primary forming stem 30 either directly (first layer to be deposited, e.g., from distribution plate 32a) or indirectly (second and subsequent layers, e.g., from plates 32b-e).

As noted above, the tubular, multilayer film 22 emerges from die 12 at discharge end 20. The discharge end 20 may thus include an annular discharge opening 44 to allow the passage of the tubular film 22 out of the die. The die structure at discharge end 20 that forms such annular opening is commonly referred to as a "die lip." As illustrated, the diameter of the annular discharge opening 44 may be greater than that of the annular passage 42, e.g., to increase the diameter of the tubular film 22 to a desired extent. This has the effect of decreasing the thickness of each of the concentric layers that make up the tubular film 22, i.e., relative to the thickness of such layers during their residence time within the annular passage 42. Alternatively, the diameter of the annular discharge opening 44 may be smaller than that of the annular passage 42.

Microlayer assembly 34 generally comprises a microlayer forming stem 46 and a plurality of microlayer distribution plates 48. In the presently illustrated embodiment, fifteen microlayer distribution plates 48a-o are shown. A greater or lesser number of microlayer distribution plates 48 may be included as desired. The number of microlayer distribution plates 48 in microlayer assembly 34 may range, e.g., from one to 3,000, such as from 10 to 1,000, or 15 to 500 layers. In many embodiments of the present invention, in particular for those producible using the die technology disclosed in copending US patent application serial no. 12/284510, the number of microlayer distribution plates 48 in microlayer assembly 34 can be at least about 5, e.g., 10, 15, 20, 25, 30, 35, 40, 45, 50, to 200 etc., or any number of plates in between the foregoing numbers. In other embodiments of the invention, in particular for those producible using the multiplier technology available from Extrusion Dies Industries LLC (EDI), disclosed herein for some of the film examples, the number of microlayer distribution plates 48 in microlayer assembly 34 can be at least about 10, e.g. 100, 500, 1,000, 1,500, 2,000, or 3,000, or any number of plates in between the foregoing numbers.

Each of the microlayer plates 48 has a fluid inlet 50 and a fluid outlet 52.
The fluid outlet 52 from each of the microlayer plates 48 is in fluid communication with microlayer forming stem 46, and is structured to deposit a microlayer of fluid onto the microlayer forming stem. Similar to the distribution plates 32, the microlayer plates 48 may also be constructed as described in the above-incorporated U.S. Pat. No. 5,076,776.

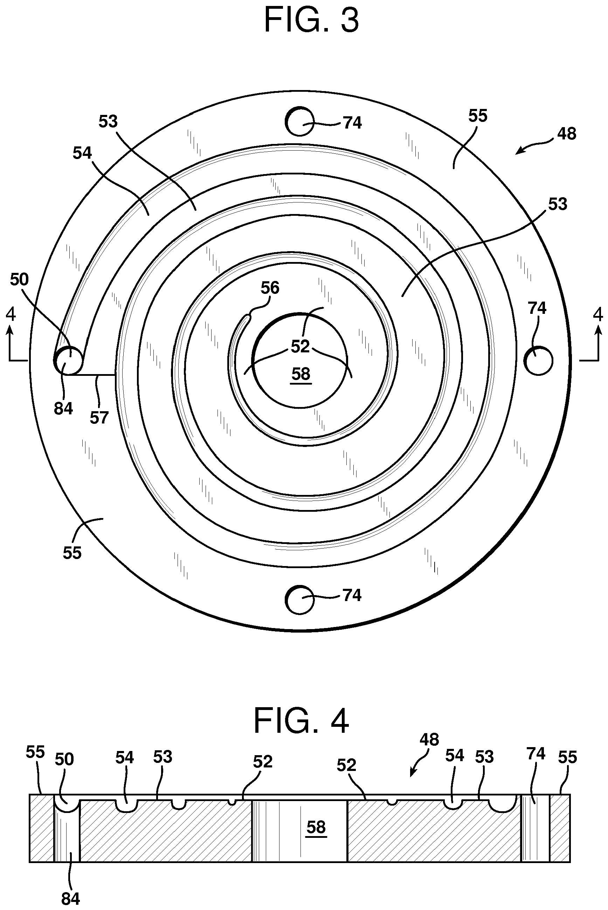

For example, as shown in FIG. 3, the microlayer plates 48 may have a spiral-shaped fluid-flow channel 54, which is supplied with fluid via fluid inlet 50. Alternatively, two or more fluid-flow channels may be employed in plate 48, which may be fed from separate fluid inlets or a single fluid inlet. Other channel configurations may also be employed, e.g., a toroid-shaped channel; an asymmetrical toroid, e.g., as disclosed in U.S. Pat. No. 4,832,589; a heart-shaped channel; a helical-shaped channel, e.g., on a conical-shaped plate as disclosed in U.S. Pat. No. 6,409,953; etc. The channel(s) may have a semi-circular or semi-oval cross-section as shown, or may have a fuller shape, such as an oval or circular cross-sectional shape.

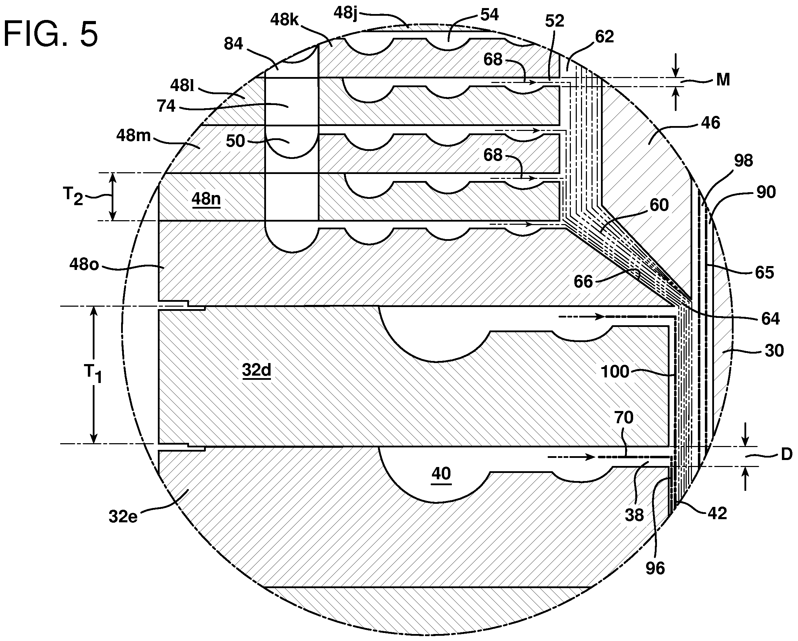

Regardless of the particular configuration or pattern that is selected for the flow channel(s) 54, its function is to connect the fluid inlet(s) 50 with the fluid outlet 52 in such a manner that the flow of fluid through the microlayer assembly 34 is converted from a generally stream-like, axial flow to a generally film-like, convergent radial flow towards the microlayer forming stem 46. Microlayer plate 48 as shown in FIG. 3 may accomplish this in two ways. First, the channel 54 spirals inwards towards the center of the plate, and thus directs fluid from the fluid inlet 50, located near the periphery of the plate, towards the fluid outlet 52, which is located near the center of the plate. Secondly, the channel 54 may be fashioned with a progressively shallower depth as the channel approaches the fluid outlet 52. This has the effect of causing some of the fluid flowing through the channel 54 to overflow the channel and proceed radially-inward toward the fluid outlet 52 in a relatively flat, film-like flow. Such radial-inward flow may occur in overflow regions 53, which may be located between the spaced-apart spiral sections of channel 54. As shown in FIG. 4, the overflow regions 53 may be formed as recessed sections in plate 48, i.e., recessed relative to the thicker, non-recessed region 55 at the periphery of the plate. As shown in FIG. 3, overflow regions 53 may begin at step-down 57 and, e.g., spiral inwards towards fluid outlet 52 between the spirals of channel 54. The non-recessed, peripheral region 55 abuts against the plate or other structure above the plate, e.g., as shown in FIGS. 2 and 5, and thus prevents fluid from flowing outside the periphery of the plate. In this manner, the non-recessed, peripheral region 55 forces fluid entering the plate to flow radially inward toward fluid outlet 52. Step-down 57 thus represents a line or zone of demarcation between the 'no-flow' peripheral region 55 and the `flow' regions 53 and 54. The fluid that remains in the channel 54 and reaches the end 56 of the channel flows directly into the fluid outlet 52.

The fluid outlet 52 generally provides a relatively narrow fluid-flow passage and generally determines the thickness of the microlayer flowing out of the microlayer plate 48. The thickness of the fluid outlet 52, and therefore the thickness of the microlayer flowing therethrough, may be determined, e.g., by the spacing between the plate surface at outlet 52 and the bottom of the plate or other structure (e.g., manifold 76 or 78) immediately above the plate surface at outlet 52.

With continuing reference to FIGS. 2-3, each of the microlayer distribution plates 48 may have an orifice 58 extending through the plate. The orifice 58 may be located substantially in the center of each microlayer plate 48, with the fluid outlet 52 of each plate positioned adjacent to such orifice 58. In this manner, the microlayer forming stem 46 may extend through the orifice 58 of each of the microlayer distribution plates 48. With such a configuration, the microlayer distribution plates 48 may have a generally annular shape such that the fluid outlet 52 forms a generally ring-like structure, which forces fluid flowing through the plate to exit the plate in a radially-convergent, ring-like flow pattern. Such ring-like structure of fluid outlet 52, in combination with its proximity to the microlayer forming stem 46, causes the fluid exiting the microlayer plates 48 to assume a cylindrical shape as the fluid is deposited onto the microlayer stem 46. Each flow of fluid from each of the microlayer distribution plates 48 thus deposits a distinct cylindrical microlayer on the microlayer forming stem 46.

The microlayer plates 48 may be arranged to provide a predetermined order in which the microlayers are deposited onto the microlayer forming stem 46. For example, if all fifteen microlayer distribution plates 48a-o are supplied with fluid, a microlayer of fluid from plate 48a will be the first to be deposited onto microlayer forming stem 46 such that such microlayer will be in direct contact with the stem 46. The next microlayer to be deposited onto the forming stem would be from microlayer plate 48b. This microlayer will be deposited onto the microlayer from plate 48a. Next, fluid from microlayer plate 48c will be deposited on top of the microlayer from plate 48b, etc. The last and, therefore, outermost microlayer to be deposited is from plate 48o. In this manner, the microlayers are deposited onto the microlayer forming stem 46 in the form of a substantially unified, microlayered fluid mass 60 (see FIG. 5). In the present example, such microlayered fluid mass 60 would comprise up to fifteen distinct microlayers (at the downstream end of stem 46), arranged as fifteen concentric cylindrical microlayers bonded and flowing together in a predetermined order (based on the ordering of the microlayer plates 48a-o) on microlayer forming stem 46.

It may thus be appreciated that the fluid layers from the microlayer distribution plates 48 are deposited onto the microlayer forming stem 46 either directly (the first layer to be deposited, e.g., from microlayer plate 48a) or indirectly (the second and subsequent layers, e.g., from microlayer plates 48b-o). The orifices 58 in each of the microlayer plates 48 are large enough in diameter to space the fluid outlets 52 of the microlayer plates 48 sufficiently from the microlayer forming stem 46 to form an annular passage 62 for the microlayers (FIG. 2). The extent of such spacing is preferably sufficient to accommodate the volume of the concentric microlayers flowing along the microlayer stem 46.

Microlayer forming stem 46 is in fluid communication with primary forming stem 30 such that the microlayered fluid mass 60 flows from the microlayer forming stem 46 and onto the primary forming stem 30. This may be seen in FIG. 5, wherein microlayered fluid mass 60 from microlayer assembly 34 is shown flowing from microlayer forming stem 46 and onto primary forming stem 30. Fluid communication between the microlayer stem 46 and primary stem 30 may be achieved by including in die 12 an annular transfer gap 64 between the annular passage 62 for the microlayer stem 46 and the annular passage 42 for the primary stem 30 (see also FIG. 2). Such transfer gap 64 allows the microlayered fluid mass 60 to flow out of the annular passage 62 and into the annular passage 42 for the primary forming stem 30. In this manner, the microlayers from microlayer plates 48 are introduced as a unified mass into the generally larger volumetric flow of the thicker fluid layers from the distribution plates 32.

The microlayer forming stem 46 allows the microlayers from the microlayer plates 48 to assemble into the microlayered fluid mass 60 in relative calm, i.e., without being subjected to the more powerful sheer forces of the thicker bulk layers flowing from the distribution plates 32. As the microlayers assemble into the unified fluid mass 60 on stem 46, the interfacial flow instabilities created by the merger of each layer onto the fluid mass 60 are minimized because all the microlayers have a similar degree of thickness, i.e., relative to the larger degree of thickness of the bulk fluid layers from distribution plates 32. When fully assembled, the microlayered fluid mass 60 enters the flow of the thicker bulk layers from distribution plates 32 on primary stem 30 with a mass flow rate that more closely approximates that of such thicker layers, thereby increasing the ability of the microlayers in fluid mass 60 to retain their physical integrity and independent physical properties.

As shown in FIG. 2, primary forming stem 30 and microlayer forming stem 46 may be substantially coaxially aligned with one another in die 12, e.g., with the microlayer forming stem 46 being external to the primary forming stem 30. This construction provides a relatively compact configuration for die 12, which can be highly advantageous in view of the stringent space constraints that exist in the operating environment of many commercial coextrusion systems.

Such construction also allows die 12 to be set up in a variety of different configurations to produce a coextruded film having a desired combination of bulk layers and microlayers. For example, one or more distribution plates 32 may be located upstream of the microlayer assembly 34. In this embodiment, fluidized bulk layers from such upstream distribution plates are deposited onto primary forming stem 30 prior to the deposition of the microlayered fluid mass 60 onto the primary stem 30. With reference to FIG. 2, it may be seen that distribution plates 32a-c are located upstream of microlayer assembly 34 in die 12. Bulk fluid layers 65 from such upstream distribution plates 32a-c are thus interposed between the microlayered fluid mass 60 and the primary forming stem 30 (see FIG. 5).

Alternatively, the microlayer assembly 34 may be located upstream of the distribution plates 32, i.e., the distribution plates may be located downstream of the microlayer assembly 34 in this alternative embodiment. Thus, the microlayers from the microlayer assembly 34, i.e., the microlayered fluid mass 60, will be deposited onto primary forming stem 30 prior to the deposition thereon of the bulk fluid layers from the downstream distribution plates 32. With reference to FIG. 2, it may be seen that microlayer assembly 34 is located upstream of distribution plates 32d-e in die 12. As shown in FIG. 5, the microlayered fluid mass 60 is thus interposed between the bulk fluid layer(s) 70 from such distribution plates 32d-e and the primary forming stem 30.

As illustrated in FIG. 2, the microlayer assembly 34 may also be positioned between one or more upstream distribution plates, e.g., plates 32a-c, and one or more downstream distribution plates, e.g., plates 32d-e. In this embodiment, fluid(s) from upstream plates 32a-c are deposited first onto primary stem 30, followed by the microlayered fluid mass 60 from the microlayer assembly 34, and then further followed by fluid(s) from downstream plates 32d-e. In the resultant multilayered film, the microlayers from microlayer assembly 34 are sandwiched between thicker, bulk layers from both the upstream plates 32a-c and the downstream plates 32d-e.

All of the microlayer plates 48 each have a thickness that is less than that of the distribution plates 32. Thus, for example, the distribution plates 32 may have a thickness T₁ (see FIG. 5) ranging from about 1.27 cm (0.5 inch) to about 5.08 cm (2 inches). The microlayer distribution plates 48 may have a thickness T₂ ranging from about 0.25 cm (0.1 inch) to about 1.27 cm (0.5 inch). Such thickness ranges are not intended to be limiting in any way, but only to illustrate typical examples. All distribution plates 32 will not necessarily have the same thickness, nor will all of the microlayer plates 48. For example, microlayer plate 48o, the most downstream of the microlayer plates in the assembly 34, may be thicker than the other microlayer plates to accommodate a sloped contact surface 66, which may be employed to facilitate the transfer of microlayered fluid mass 60 through the annular gap 64 and onto the primary forming stem 30.

As also shown in FIG. 5, each of the microlayers flowing out of the plates 48 has a thickness "M" corresponding to the thickness of the fluid outlet 52 from which each microlayer emerges. The microlayers flowing from the microlayer plates 48 are schematically represented in FIG. 5 by the phantom arrows 68.

Similarly, each of the relatively thick bulk layers flowing out of the plates 32 has a thickness "D" corresponding to the thickness of the fluid outlet 38 from which each such layer emerges (see FIG. 5). The thicker/bulk layers flowing from the distribution plates 32 are schematically represented in FIG. 5 by the phantom arrows 70.

Generally, the thickness M of the microlayers will be less than the thickness D of the bulk layers from the distribution plates 32. The thinner that such microlayers are relative to the bulk layers from the distribution plates 32, the more of such microlayers that can be included in a multilayer film, for a given overall film thickness. Microlayer thickness M from each microlayer plate 48 can be of any suitable thickness. As an example, without being limited thereto, M can range from about 0.025 to 254 µm (0.0001 to 10 mils). Thickness D can be of any suitable thickness. As an example, without being limited thereto, D from each distribution plate 32 can range from about .381 µm (15 mils) to about 508 µm (20 mils).

The ratio of M:D may in general range from about 1:1.1 to about 1:30,000, e.g. from 1:5 to 1:20,000, 1:10 to 1:10,000, 1:20 to 1:5,000, 1:30 to 1:1,000, 1:50 to 1:500, or any range of ratios in between the foregoing ranges of ratios. Thickness M may be the same or different among the microlayers 68 flowing from microlayer plates 48 to achieve a desired distribution of layer thicknesses in the microlayer section of the resultant film. Similarly, thickness D may be the same or different among the thicker bulk layers 70 flowing from the distribution plates 32 to achieve a desired distribution of layer thicknesses in the bulk-layer section(s) of the resultant film.

The layer thicknesses M and D will typically change as the fluid flows downstream through the die, e.g., if the melt tube is expanded at annular discharge opening 44 as shown in FIG. 2, and/or upon further downstream processing of the tubular film, e.g., by stretching, orienting, or otherwise expanding the tube to achieve a final desired film thickness and/or to impart desired properties into the film. The flow rate of fluids through the plates will also have an effect on the final downstream thicknesses of the corresponding film layers.

As described above, the distribution plates 32 and microlayer plates 48 preferably have an annular configuration, such that primary forming stem 30 and microlayer stem 46 pass through the center of the plates to receive fluid that is directed into the plates. The fluid may be supplied from extruders, such as extruders 14a, b. The fluid may be directed into the die 12 via vertical supply passages 72, which receive fluid from feed pipes 18, and direct such fluid into the die plates 32 and 48. For this purpose, the plates may have one or more through-holes 74, e.g., near the periphery of the plate as shown in FIG. 3, which may be aligned to provide the vertical passages 72 through which fluid may be directed to one or more downstream plates.

Although three through-holes 74 are shown in FIG. 3, a greater or lesser number may be employed as necessary, e.g., depending upon the number of extruders that are employed. In general, one supply passage 72 may be used for each extruder 14 that supplies fluid to die 12. The extruders 14 may be arrayed around the circumference of the die, e.g., like the spokes of a wheel feeding into a hub, wherein the die is located at the hub position.

With reference to FIG. 1, die 12 may include a primary manifold 76 to receive the flow of fluid from the extruders 14 via feed pipes 18, and then direct such fluid into a designated vertical supply passage 72, in order to deliver the fluid to the intended distribution plate(s) 32 and/or microlayer plate(s) 48. The microlayer assembly 34 may optionally include a microlayer manifold 78 to receive fluid directly from one or more additional extruders 80 via feed pipe 82 (shown in phantom in FIG. 1).

In the example illustrated in FIGS. 1-2, extruder 14b delivers a fluid, e.g., a first molten polymer, directly to the fluid inlet 36 of distribution plate 32a via pipe 18b and primary manifold 76. In the presently illustrated embodiment, distribution plate 32a receives all of the output from extruder 14b, i.e., such that the remaining plates and microlayer plates in the die 12 are supplied, if at all, from other extruders. Alternatively, the fluid inlet 36 of distribution plate 32a may be configured to contain an outlet port to allow a portion of the supplied fluid to pass through to one or more additional plates, e.g., distribution plates 32 and/or microlayer plates 48, positioned downstream of distribution plate 32a.

For example, as shown in FIGS. 3-4 with respect to the illustrated microlayer plate 48, an outlet port 84 may be formed in the base of the fluid inlet 50 of the plate. Such outlet port 84 allows the flow of fluid delivered to plate 48 to be split: some of the fluid flows into channel 54 while the remainder passes through the plate for delivery to one or more additional downstream plates 48 and/or 32. A similar outlet port can be included in the base of the fluid inlet 36 of a distribution plate 32. Delivery of fluid passing through the outlet port 84 (or through a similar outlet port in a distribution plate 32) may be effected via a through-hole 74 in an adjacent plate (see FIG. 5), or via other means, e.g., a lateral-flow supply plate, to direct the fluid in an axial, radial, and/or tangential direction through die 12 as necessary to reach its intended destination.

Distribution plates 32b-c are being supplied with fluid via extruder(s) and supply pipe(s) and/or through-holes that are not shown in FIG. 2. The bulk fluid flow along primary forming stem 30 from distribution plates 32a-c is shown in FIG. 5, as indicated by reference numeral 65.

As shown in FIGS. 1-2, microlayer assembly 34 is being supplied with fluid by extruders 14a and 80. Specifically, microlayer plates 48a, c, e, g, i, k, m, and o are supplied by extruder 14a via supply pipe 18a and vertical pipe and/or passage 72. Microlayer plates 48b, d, f, h, j, l, and n are supplied with fluid by extruder 80 via feed pipe 82 and a vertical supply passage 86. In the illustrated embodiment, vertical passage 86 originates in microlayer manifold 78 and delivers fluid only within the microlayer assembly 34. In contrast, vertical passage 72 originates in manifold 76, extends through distribution plates 32a-c (via aligned through-holes 74 in such plates), then further extends through manifold 78 via manifold passage 79 before finally arriving at microlayer plate 48a.

Fluid from extruder 14a and vertical passage 72 enters microlayer plate 48a at fluid inlet 50. Some of the fluid passes from inlet 50 and into channel 54 (for eventual deposition on microlayer stem 46 as the first microlayer to be deposited on stem 46), while the remainder of the fluid passes through plate 48a via outlet port 84. Microlayer plate 48b may be oriented, i.e., rotated, such that a through-hole 74 is positioned beneath the outlet port 84 of microlayer plate 48a so that the fluid flowing out of the outlet port 84 flows through the microlayer plate 48b, and not into the channel 54 thereof. Microlayer plate 48c may be positioned such that the fluid inlet 50 thereof is in the same location as that of microlayer plate 48a so that fluid flowing out of through-hole 74 of microlayer plate 48b flows into the inlet 50 of plate 48c. Some of this fluid flows into the channel 54 of plate 48c while some of the fluid passes through the plate via outlet port 84, passes through a through-hole 74 in the next plate 48d, and is received by fluid inlet 50 of the next microlayer plate 48e, where some of the fluid flows into channel 54 and some passes out of the plate via outlet port 84. Fluid from extruder 14a continues to be distributed to remaining plates 48g, i, k, and m in this manner, except for microlayer plate 48o, which has no outlet port 84 so that fluid does not pass through plate 48o, except via channel 54 and fluid outlet 52.

In a similar manner, fluid from extruder 80 and vertical passage 86 passes through microlayer plate 48a via a through-hole 74 and then enters microlayer plate 48b at fluid inlet 50 thereof. Some of this fluid flows through the channel 54 and exits the plate at outlet 52, to become the second microlayer to be deposited onto microlayer stem 46 (on top of the microlayer from plate 48a), while the remainder of the fluid passes through the plate via an outlet port 84. Such fluid passes through microlayer plate 48c via a through-hole 74, and is delivered to plate 48d via appropriate alignment of its inlet 50 with the through-hole 74 of plate 48c. This fluid-distribution process may continue for plates 48f, h, j, and l, until the fluid reaches plate 48n, which has no outlet port 84 such that fluid does not pass through this plate except via its fluid outlet 52.

In this manner, a series of microlayers comprising alternating fluids from extruders 14a and 80 may be formed on microlayer stem 46. For example, if extruder 14a supplied AOB and extruder 80 supplied EVOH as a passive oxygen barrier, the resultant microlayered fluid mass 60 would have the structure:
AOB/EVOH/AOB/EVOH/AOB/EVOH/AOB/EVOH/AOB/EVOH/AOB/EVOH/AOB/EVOH/AOB

The fluids from extruders 14a and 80 may be the same or different such that the resultant microlayers in microlayered fluid mass 60 may have the same or a different composition. Only one extruder may be employed to supply fluid to the entire microlayer assembly 34, in which case all of the resultant microlayers will comprise AOB. Alternatively, two or more extruders may be used to supply fluid to the microlayer assembly 34, e.g., with each supplying a different fluid, e.g., polymer "a" (AOB), polymer "b" (passive oxygen barrier), and optionally polymer "c" (e.g. a blend of AOB and passive oxygen barrier) respectively, such that two or three different microlayer compositions are formed in microlayered fluid mass 60, in any desired order, to achieve any desired layer-combination, e.g., a/b/a/b/a/b, a/b/c/a/b/c; a/b/b/c/a/b/b/c; a/b/a/c/a/b/a/c; etc.

Alternatively, a series of microlayers in accordance with the invention can be arranged in a partially or totally random manner.

Similarly, the fluid(s) directed through the distribution plate(s) 32 may be substantially the same as the fluid(s) directed through the microlayer assembly 34. Alternatively, the fluid(s) directed through the distribution plate(s) 32 may be different from the fluid(s) directed through the microlayer assembly. The resultant tubular film can have bulk layers and microlayers that have substantially the same or different composition. Alternatively, some of the bulk layers from distribution plates 32 may be the same as some or all of the microlayers from microlayer plates 48, while other bulk layers may be different from some or all of the microlayers.

In the illustrated example, the extruders and supply passages for distribution plates 32d-e are not shown. One or both of such plates may be supplied from extruder 14a, 14b, and/or 80 by appropriate arrangement of vertical supply passages 72, 86, through-holes 74, and/or outlet ports 84 of the upstream distribution plates 32 and/or microlayer plates 48. Alternatively, one or both distribution plates 32d-e may not be supplied at all, or may be supplied from a separate extruder, such as an extruder in fluid communication with primary manifold 76 and a vertical supply passage 72 that extends through distribution plates 32a-c and microlayer assembly 34, e.g., via appropriate alignment of the through-holes 74 of plates 32a-c and microlayer assembly 34 to create a fluid transport passage through die 12, leading to fluid inlet 50 of distribution plate 32d and/or 32e.

If desired, one or more of the distribution plates 32 and/or microlayer plates 48 may be supplied with fluid directly from one or more extruders, i.e., by directing fluid directly into the fluid inlet of the plate, e.g., from the side of the plate, without the fluid being first routed through one of manifolds 76 or 78 and/or without using a vertical supply passage 72, 86. Such direct feed of one or more plates 32 and/or 48 may be employed as an alternative or in addition to the use of manifolds and vertical supply passages as shown in FIG. 2.

The inventors have discovered that the system 10 is advantageous when used to make a multilayer AOB film, i.e., films that include a plurality of microlayers comprising an active oxygen barrier.

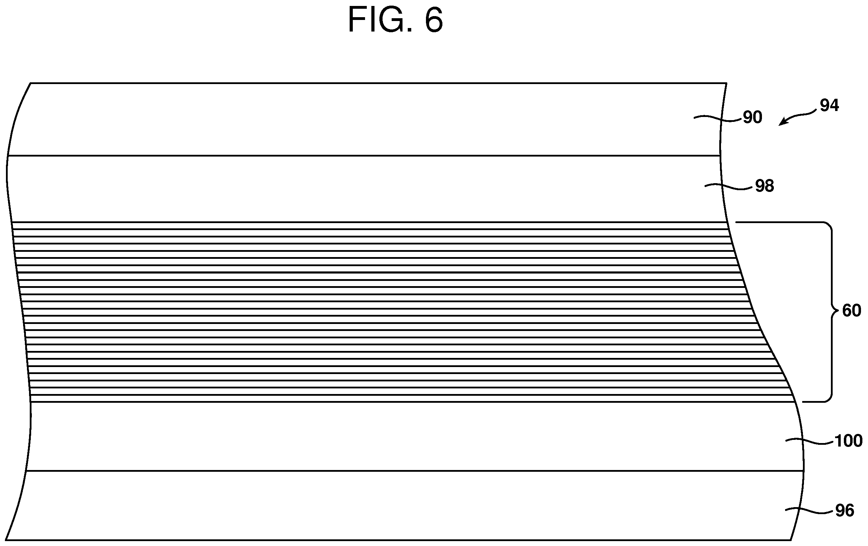

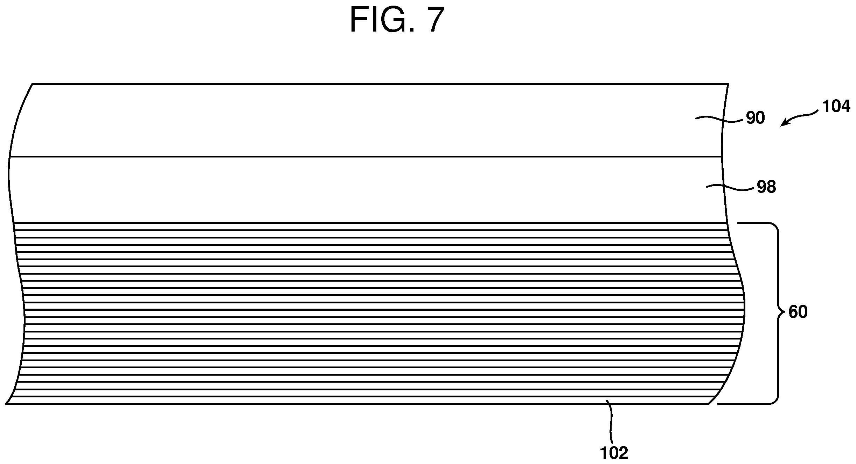

For example, films 94 have at least one microlayer section 60, and one or more bulk layers, e.g., 90, 96, 98, and/or 100 (see FIGS. 6 and 7).

Such films may be formed from system 10 by directing a first polymer 88, e.g. an ethylene polymer or copolymer, through extruder 14b and distribution plate 32a of die 12, and onto primary forming stem 30 such that the first polymer 88 is deposited onto primary forming stem 30 as a first bulk layer 90 (see FIGS. 1, 2 and 5). At least a second polymer 92, e.g. an active oxygen barrier, may be directed through extruder 14a and microlayer assembly 34, e.g., via vertical passage 72, to form microlayered fluid mass 60 on microlayer forming stem 46. The microlayered fluid mass 60 is then directed from microlayer forming stem 46 and onto primary forming stem 30. In this manner, the microlayered fluid mass 60 is merged with first bulk layer 90 within die 12 (FIG. 5), thereby forming multilayer film 22 (FIG. 1) as a relatively thick "extrudate, which comprises the bulk layer 90 and microlayer section 60 as solidified film layers resulting from the fluid (molten) polymer layer 90 and microlayered fluid mass 60 within die 12.

As the coextruded, tubular multilayer "extrudate" 22 emerges from the discharge end 20 of die 12, it can be quenched (e.g., via immersion in water) to produce a cast film, and then optionally stretch-oriented under conditions that impart heat-shrinkability to the film; or can be expanded out of the die to produce a blown film. Extrudate 22 is thus converted into a film 94, a cross-sectional view of which is shown in FIG. 6. As shown in FIG. 5, first bulk layer 90 may be deposited onto primary forming stem 30 prior to the deposition of the microlayered fluid mass 60 onto the primary forming stem 30 such that the first layer 90 is interposed between the microlayered fluid mass 60 and the primary forming stem 30. If desired, a third polymer may be directed through a second distribution plate, e.g., distribution plate 32e (see FIG. 2; source of third polymer not shown). As shown in FIG. 5, the relatively thick flow 70 of such third polymer from distribution plate 32e may be merged with the microlayered fluid mass 60 to form a second bulk layer 96 for the multilayer film 94. In this manner, the microlayer section 60 may form a core for the multilayer film 94, with the first bulk layer 90 forming a first outer layer for the multilayer film 94 and the second bulk layer 96 forming a second outer layer therefor. Thus, in the embodiment illustrated in FIG. 6, film 94 comprises microlayer section 60 positioned between the first and second bulk, outer layers 90, 96.

The second polymer 92 may be substantially the same as the first polymer 88, such that the composition of the first bulk layer 90 may be substantially the same as that of the microlayers 60. Alternatively, the second polymer 92 may be different from the first polymer 88, such that the composition of the first layer 90 may be different from that of the microlayers 60. Similarly, the composition of second bulk layer 96 may be the same or different from that of first layer 90, and also the same or different from that of the microlayers 60.

As a further variation, a first intermediate bulk layer 98 may be interposed between the first outer layer 90 and the microlayer section 60 in film 94. Similarly, a second intermediate bulk layer 100 may be interposed between the second outer layer 96 and the microlayer section 60. The composition of layers 90 and 98 may be the same or different. Similarly, the composition of layers 96 and 100 may be the same or different. First intermediate bulk layer 98 may be formed from polymer directed through distribution plate 32b while second intermediate bulk layer 100 may be formed from polymer directed through distribution plate 32e (see FIGS. 2 and 5). If the composition of layers 90 and 98 is the same, the same extruder 14b may be used to supply both of distribution plates 32a and 32b. If the composition of such layers is different, two different extruders are used to supply the distribution plates 32a and 32b. The foregoing also applies to the supply of polymer to distribution plates 32d and 32e.

To make the film illustrated in FIG. 6, no polymer was supplied to distribution plate 32c. If polymer was supplied to distribution plate 32c, the resultant film would have an additional intermediate bulk layer between layer 98 and microlayer section 60.

Film 94, as illustrated in FIG. 6, is representative of many of the inventive films described in the Examples below, in that such films have a total of twenty five (25) microlayers in the core of the film. The die used to make such films was essentially as illustrated in FIG. 2, except that twenty five (25) microlayer plates were included in the microlayer assembly 34. For simplicity of illustration, only fifteen (15) microlayer plates are shown in the microlayer assembly 34 of die 12 in FIG 2. Generally, the microlayer section 60 may comprise any desired number of microlayers, e.g., between 2 and 50 microlayers, such as between 10 and 40 microlayers, etc. up 200 microlayers.

In one embodiment, each of the microlayers 60 can comprise an active oxygen barrier. This embodiment can be produced by supplying all microlayer plates 48 with polymer by extruder 14a.

In a second embodiment, at least one of the microlayers 60 may have a composition that is different from the composition of at least one other of the microlayers, i.e., two or more of the microlayers may have compositions that are different from one other. This can be accomplished, e.g., by employing extruder 80 to supply a different polymer (i.e., different from the polymer supplied by extruder 14a) to at least one of the microlayer plates 48. Thus, as shown in FIGS. 1 and 2, extruder 14a may supply the "odd" microlayer plates (i.e., plates 48a, c, e, etc.) with polymer composition "A", e.g. active oxygen barrier, while extruder 80 supplies the "even" microlayer plates (i.e., plates 48b, d, f, etc.) with polymer composition "B", e.g. passive oxygen barrier, such that the microlayer section 60 will comprise alternating microlayers of "A" and "B", i.e., ABABAB....

In a third embodiment, a third extruder can supply a polymeric composition "C", e.g. a blend of AOB and EVOH, to provide a repeating "ABC" ordering of the microlayers, i.e., ABCABC.... Numerous other variations are, of course, possible.

Each of the microlayers 60 in film 94 may have substantially the same thickness. Alternatively, at least one of the microlayers may have a thickness that is different from the thickness of at least one other of the microlayers. The thickness of the microlayers 60 in film 94 will be determined by a number of factors, including the construction of the microlayer plates, e.g., the spacing "M" of the fluid outlet 52 (FIG. 5), the mass flow rate of fluidized polymer that is directed through each plate, the degree of stretching to which the extrudate 22/ film 94 is subjected during casting, orientation, etc.

Each of the microlayers 60 in film 94 has a thickness that is significantly less than that of any of the bulk layers in the film, i.e., those produced by the relatively thick distribution plates 32 Exemplary ratios of the thickness of any of the microlayers 60 to the thickness of bulk layer 90 are discussed above, and the same thickness ratio range may apply to each of the microlayers 60 relative any of the other bulk layers in film 94, e.g., second outer layer 96 or intermediate layers 98 and/or 100. Thus, for example, each of the microlayers 60 may have a thickness ranging from about 0.0025 µm (0.0001 mils) to about 2.5 µm (0.1 mils), while each of the bulk layers 90, 96, 98 and/or 100 may have a thickness ranging from about 3.8 µm (0.15 mils) to about 495 µm (19.5 mils).

The foregoing is demonstrated in further detail in the Examples below.

The repeating sequence of the "A/B" layers may, as shown in many of the Examples, have no intervening layers, i.e., wherein the microlayer section 60 contains only layers "A" and "B" as described above (with layer "B" being a single polymer or a blend of two or more polymers). Alternatively, one or more intervening layers may be present between the "A" and "B" layers, e.g., a microlayer "C", comprising a polymer or polymer blend that is different from those in the "A" and "B" microlayers, such that the repeating sequence of layers has the structure "A/B/C/A/B/C...", "A/C/B/A/C/B...", etc. Other sequences are, of course, also possible, such as "A/A/B/A/A/B...", "A/B/B/A/B/B...." etc. "A/B" (or A/B/C, A/A/B, A/B/B, etc.) sequence may be repeated as many times as necessary to obtain a desired number of microlayers in microlayer section 60.

In another alternative, where the active barrier is "A" and the passive barrier is "B", microlayer sequences may take the form of "B/A/B/A/B/A" etc., or "B/B/A/B/B/A", etc., or "B/B/B/A/B/B/B/A", etc.

Alternatively, a series of microlayers in accordance with the invention can be arranged in a partially or totally random manner.

In the production of films of the invention, the fluid layers coextruded by die 12 that form the bulk layers can comprise one or more molten thermoplastic polymers. Examples of such polymers include polyolefin, polyester (e.g., PET and PETG), polystyrene, (e.g., modified styrenic polymer such as SEBS, SBS, etc.), polyamide homopolymer and copolymer (e.g. PA6, PA12, PA6/12, etc.), polycarbonate, cyclic olefin copolymer (COC), poly(lactic acid) (PLA), poly(glycolic acid) (PGA), etc. Within the family of polyolefins, various polyethylene homopolymers and copolymers may be used, as well as polypropylene homopolymers and copolymers (e.g., propylene/ethylene copolymer). Polyethylene homopolymers may include low density polyethylene (LDPE) and high density polyethylene (HDPE). Suitable polyethylene copolymers may include a wide variety of polymers, e.g., ionomer, ethylene/vinyl acetate copolymer (EVA), ethylene/vinyl alcohol copolymer (EVOH), and ethylene/alpha-olefin copolymer.

FIG. 7 illustrates an alternative embodiment of the invention, in which the microlayer section 60 is positioned at an exterior surface of the film, such that one of the microlayers forms an outer layer 102 for the resultant, multilayer film 104. Thus, in contrast to film 94, in which the microlayer section 60 is in the interior of the film, in film 104, the microlayer section 60 is positioned at the outside of the film such that microlayer 102 forms an outer layer for the film. Film 104 may be formed from die 12 as described above in relation to film 94, except that no fluidized polymer would be directed through distribution plates 32d or 32e such that bulk layers 96 and 100 are omitted from the film structure. In the resultant tube 22 that emerges from die 12, bulk layer 90 would thus be the inner-most layer of the tube while microlayer 102 would form the outer-most layer. Such tube 22 is then stretch-oriented as described above, e.g., via the blown bubble or tenterframe process, to make film 104.

As an alternative, film 104 may be converted into a film having a pair of microlayers 102 on both of the opposing outer layers of the film. To make such a film, die 12 may be configured as described immediately above, with the resultant tube 22 being stretch-oriented via the blown bubble process to make film 104 in the form of a heat-shrinkable/expanded tube. Such expanded tube may then be collapsed and welded together such that the inner bulk layer 90 adheres to itself. The resultant film has microlayer section 60 on both outer surfaces of the film, with a pair of bulk layers 90 in the center of the film, and a pair of intermediate bulk layers 98 spaced from one another by the pair of bulk layers 90. In this configuration, a pair of microlayers 102 forms both of the opposing outer layers for the film. Such film thus has microlayered "skins" with one or more bulk layers in the core. If desired, a material may be included at the inner-most layer of the tube to facilitate the welding of the tube to itself, e.g., a layer of mPE, ionomer, EAA, EMA, EMAA, EBA, EPC, EVA or an adhesive, e.g., anhydride-grafted polymer, which may be directed through plate 32a of die 12, with bulk layers 90 and 98 being formed from plates 32b and 32c, respectively. The films described below in Examples 72 and 74-76 were prepared in this manner.

If desired, a second microlayer assembly 34 may be added to die 12, which forms a second microlayer section in the resultant film. Accordingly, another way to form a film having a microlayer section at both outer surfaces of the film is to configure die 12 such the distribution plates 32 are sandwiched between both microlayer assemblies 34. Such configuration will produce a film having microlayered skins with one or more bulk layers in the core, without the need to collapse and weld the inflated tube as described above.

An alternative configuration of die 12 will also result in film 104 as shown in FIG. 8. In such configuration, the supply of fluidized polymer to die 12 may be arranged such that microlayered fluid mass 60 is deposited onto primary forming stem 30 prior to the deposition of bulk layer 90 onto the primary forming stem 30. In this manner, the microlayered fluid mass 60 is interposed between the bulk layer 90 and primary forming stem 30. In this case, with reference to FIG. 2, no fluidized polymer would be supplied to distribution plates 32a-c. Instead, the bulk layer 90 would be formed by supplying fluidized polymer to distribution plate 32e, and the intermediate bulk layer 98 would be formed by supplying fluidized polymer to distribution plate 32d. In the resultant tube 22 that emerges from die 12, bulk layer 90 would thus be the outer-most layer of the tube while microlayer 102 would form the inner-most layer. Such tube 22 is then stretch-oriented as described above, e.g., via the blown bubble or tenterframe process, to make film 104.

The invention will now be further described in the following examples.

### Film Embodiments of the Invention

A representative film structure of some embodiments of the invention is as follows:

| first outside layer | Tie | microlayers | Tie | second outside layer |
|---|---|---|---|---|
| A | B | C | D | E |

Core layer C of the above film structure is a microlayer section comprising, consisting essentially of, or consisting of a plurality of microlayers. In some embodiments, each of the microlayers of core layer C can comprise, consist essentially of, or consist of AOB. The AOB can be of a single type, or different active oxygen barriers can be used in different microlayers. For example, the microlayer section can be made up of alternating layers of AOB₁ and AOB₂, where AOB, and AOB₂ are both active oxygen barriers but of different composition.

In other embodiments, some of the microlayers can comprise, consist essentially of, or consist of AOB, and some can comprise, consist essentially of, or consist of passive oxygen barrier. For example, the microlayer section can be made up of alternating layers of AOB and passive oxygen barrier.

In yet other embodiments, some of the microlayers can comprise, consist essentially of, or consist of AOB, and some can comprise, consist essentially of, a blend of AOB₁ with AOB₂, or with EVOH. For example, the microlayer section can be made up of alternating layers of AOB, and AOB + EVOH.

In embodiments where blends are present in one or more of the microlayers, the components of the blend be present in any suitable amount, as a percent of the overall blend. For example, wherein AOB is blended with EVOH, the AOB can be 20% of the blend, such as 30%, 40%, 50%, 60%, 70%, or 80%, and all percentages intermediate these values. Intermediate layers C and E each comprise or consist essentially of passive oxygen barrier.

Tie layers B and D can comprise any suitable polymeric adhesive that functions to bond two layers together. Materials that can be used in embodiments of the present invention include e.g. ethylene/vinyl acetate copolymer; anhydride grafted ethylene/vinyl acetate copolymer; anhydride grafted ethylene/alpha olefin copolymer; anhydride grafted polypropylene; anhydride grafted low density polyethylene; ethylene/ methyl acrylate copolymer; anhydride grafted high density polyethylene, ionomer resin, ethylene/acrylic acid copolymer; ethylene/methacrylic acid copolymer; and anhydride grafted ethylene/ methyl acrylate copolymer. A suitable anhydride can be maleic anhydride. Tie layers B and F can be the same, or can differ. The choice of tie layers depends at least in part on the choice of polymer for the outer layers A and E respectively, as well as the microlayer of the microlayer section adjacent the respective tie layer.

Layer A, the first outside layer, will typically function as a sealant layer of the film. This layer can comprise one or more semicrystalline olefinic polymers. Polymers that may be used for the layer A include ethylene polymer or copolymer, ethylene/alpha olefin copolymer, ethylene/vinyl acetate copolymer, ionomer resin, ethylene/ acrylic or methacrylic acid copolymer, ethylene/ acrylate or methacrylate copolymer, low density polyethylene, high density polyethylene, propylene homopolymer, propylene/ethylene copolymer, or blends of any of these materials.

Layer E can comprise any of the materials useful for layer A. The compositions of layers A and E can be the same, or different. In one embodiment, layer E can comprise one outermost layer of the film such that when formed into a pouch, layer E comprises the layer furthest from the packaged product; and an olefinic polymer or copolymer such as ethylene/alpha olefin copolymer (EAO) can comprise the inner layer A of the film, such that when formed into a pouch, the EAO comprises the layer closest to the packaged product. In this embodiment, the film can be lap sealed, for example a longitudinal lap seal running the length of the pouch, such that layer E is sealed to the EAO inner layer A. This embodiment provides a longitudinally lap sealed pouch.

Pouches made from the film of the present invention can be fin sealed or lap sealed. Additional materials that can be incorporated into one or both of the outer layers of the film, and in other layers of the film as appropriate, include antiblock agents, slip agents, antifog agents, etc.

Other additives can also be included in the composition to impart properties desired for the particular article being manufactured. Such additives include, but are not necessarily limited to, fillers, pigments, dyestuffs, antioxidants, stabilizers, processing aids, plasticizers, fire retardants, UV absorbers, etc.

Additional materials, including polymeric materials or other organic or inorganic additives, can be added to layers A and E as needed.

In general, the film can have any total thickness desired, and each layer and microlayer can have any thickness desired, within the parameters disclosed in this application, so long as the film provides the desired properties for the particular packaging operation in which the film is used. Examples of total thicknesses for the film of the invention, without being limited thereto, are from 12,7 µm (0.5 mils) to 508 µm (20 mils), such as 12.7 to 381 µm (0.5 to 15 mils), such as 25.4 µm (1 mil) to 305 µm (12 mils), such as 50.8 µm (2 mils) to 254 µm (10 mils), 76.2 µm (3 mils) to 203 µm (8 mils), and 102 µm (4 mils) to 152 µm (6 mils), and all ranges therebetween.

The at least one active oxygen barrier microlayer comprises a composition that is a blend of a thermoplastic resin (A) having carbon-carbon double bonds substantially in its main chain, a transition metal salt (B), and an oxygen barrier polymer (C). In some embodiments, the blend may also include a compatibilizer (D). The oxygen barrier polymer will typically comprise 70 to 99% by weight of the composition, and the thermoplastic resin having carbon-carbon double bonds with typically comprise from about 1 to 30 weight % of the polymeric portion of the composition. When a compatibilizer is used, it generally comprises from about 0.1 to 29 weight % of the total polymeric portion of the composition. Suitable active oxygen barrier compositions are described in greater detail in U.S. Patent Publication Nos. 2006/0281882 and 2005/0153087.

The thermoplastic resin (A) comprises at least one of the units represented by formula (I) and formula (II): 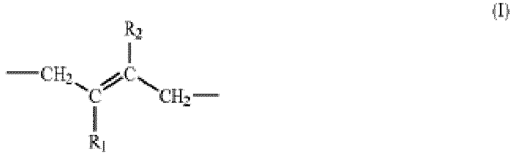 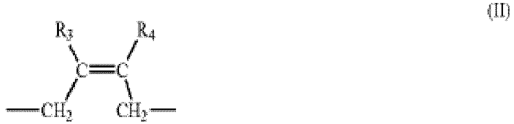 wherein R1, R2, R3 and R4 are the same or different, a hydrogen atom, an alkyl group that may be substituted, an aryl group that may be substituted, an alkylaryl group that may be substituted, -COOR5, -OCOR6, a cyano group or a halogen atom, and R3 and R4 may together form a ring via a methylene group or an oxymethylene group, where R5 and R6 are an alkyl group that may be substituted, an aryl group that may be substituted or an alkylaryl group that may be substituted. In one embodiment, R1, R2, R3 and R4 are hydrogen atoms in the formula (I) and formula (II). In some embodiments, the adjacent carbon-carbon double bonds in the thermoplastic resin (A) are separated by at least three methylenes.

In one embodiment, the thermoplastic resin (A) has a unit represented by a 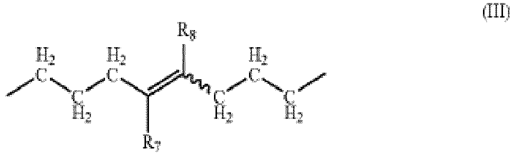 formula
wherein R7 and R8 are each independently a hydrogen atom, an alkyl group that may be substituted, an aryl group that may be substituted, an alkylaryl group that may be substituted, -COOR9, -OCOR10, a cyano group or a halogen atom, and R9 and R10 are each independently a hydrogen atom, or an alkyl group having 1 to 10 carbon atoms.

In one embodiment, the thermoplastic resin (A) comprises at least one resin selected from the group consisting of polybutadiene, polyisoprene, polychloroprene, polyoctenamer and polyoctenylene, and combinations thereof. In one particular embodiment, the thermoplastic resin (A) is at least one resin selected from the group consisting of polybutadiene and polyoctenylene, and combinations thereof, such as polyoctenylene.
The transition metal salt (B) includes at least one metal salt selected from the group consisting of an iron salt, a nickel salt, a copper salt, a manganese salt and a cobalt salt, and combinations thereof. Counter ions for the transition metal salt may include caproate, 2-ethylhexanoate, neodecanoate, oleate, palmitate and stearate, and combinations thereof. Typically, the amount of transition metal salt (B) that is contained in the composition is present in a ratio of about 1 to 50,000 ppm in terms of the metal element with respect to the weight of the thermoplastic resin (A). In one embodiment, the transition metal salt (B) is contained in a ratio of about 5 to 10,000 ppm, and in particular in a ratio of about 10 to 5,000 ppm.

Generally, the oxygen absorption amount of the thermoplastic resin (A) is at least about 1.6 mols per 1 mol of carbon-carbon double bonds of the thermoplastic resin (A). In one embodiment, the oxygen absorption rate of the active oxygen barrier layers is at least about 0.01 ml/ (g·day).

In one embodiment, particles of the thermoplastic resin (A) are dispersed in a matrix of the oxygen barrier polymer (C) in the composition. As discussed above, the oxygen barrier polymer (C) generally has an oxygen transmission rate of 500 ml·20 µm/ (m2·day·atm) or less in 65% RH at 20° C. The oxygen barrier polymer is selected from the group consisting of polyvinyl alcohol, ethylene vinyl alcohol copolymer, polyamide, polyvinyl chloride and its copolymers, polyvinylidene dichloride and its copolymers, and polyacrylonitrile and its copolymers, polyethylene naphthenate and its copolymers, polyethylene terephthalate and its copolymers, and combinations thereof.
The oxygen barrier polymer generally has an oxygen permeability of 500 cc·20µm/ (m2·day·atm.) or less at 65% RH and 20º C. In one embodiment, the oxygen barrier polymer (C) is selected from the group consisting of polyvinyl alcohol, ethylene vinyl alcohol copolymer, polyamide, polyvinyl chloride and its copolymers, polyvinylidene dichloride and its copolymers, and polyacrylonitrile and its copolymers, and combinations thereof.

In one particular embodiment, the oxygen barrier polymer (C) is ethylene vinyl alcohol copolymer having an ethylene content from 5 to 60 mol% and a degree of saponification of 90% or more. More preferably, the ethylene vinyl alcohol copolymer has an ethylene content between 27 and 60 mole percent, and in particular from about 30 to 44 mole percent, for example, 32 mole percent. Generally, the oxygen barrier polymer (C) is present in an amount of 70 to 99 weight % and the thermoplastic resin (A) is contained in an amount of 1 to 30 weight %, when the total weight of the thermoplastic resin (A) and the oxygen barrier polymer (C) is determined to be 100 weight %.

In some embodiments, the composition comprising the active oxygen barrier layer may further include a compatibilizer (D). An example of a suitable compatibilizer (D) having a polar group is disclosed in detail, for example, in Japanese Laid-Open Patent Publication No. 2002-146217. Among the compatibilizers disclosed in the publication, a styrene-hydrogenated diene block copolymer having a boronic ester group is particularly useful. The above-described compatibilizer (D) can be used alone or in combination of two or more.

In one particular embodiment, the oxygen barrier polymer (C) is contained in an amount of 70 to 98.9 weight %, the thermoplastic resin (A) is contained in an amount of 1 to 29.9 weight %, and the compatibilizer (D) is contained in an amount of 0.1 to 29 weight %, when the total weight of the thermoplastic resin (A), the oxygen barrier polymer (C) and the compatibilizer (D) is determined to be 100 weight %.

As the compatibilizer (D), ethylene-vinyl alcohol copolymers can also be used. In particular, when the oxygen barrier polymer (C) is EVOH, its effect as the compatibilizer is exhibited sufficiently. Among these, an ethylene-vinyl alcohol copolymer having an ethylene content of 70 to 99 mol % and a degree of saponification of 40% or more is preferable to improve the compatibility. The ethylene content is more preferably 72 to 96 mol %, even more preferably 72 to 94 mol %. When the ethylene content is less than 70 mol %, the affinity with the thermoplastic resin (A) may be deteriorated. When the ethylene content is more than 99 mol %, the affinity with the EVOH may be deteriorated. Furthermore, the degree of saponification is preferably 45% or more. There is no limitation regarding the upper limit of the degree of saponification, and an ethylene-vinyl alcohol copolymer having a degree of saponification of substantially 100% can be used. When the degree of saponification is less than 40%, the affinity with the EVOH may be deteriorated.

When the oxygen absorption resin composition of the present invention contains the oxygen barrier polymer (C) and the compatibilizer (D) as resin components, in addition to the thermoplastic resin (A), it is preferable that the thermoplastic resin (A) is contained in a ratio of 1 to 29.9 weight %, the oxygen barrier polymer (C) is contained in a ratio of 70 to 98.9 weight %, and the compatibilizer (D) is contained in a ratio of 0.1 to 29 weight %, when the total weight of the thermoplastic resin (A), the oxygen barrier polymer (C) and the compatibilizer (D) is 100 weight %. If the content of the oxygen barrier polymer (C) is less than 70 weight %, the gas barrier properties of the resin composition with respect to oxygen gas or carbon dioxide gas may deteriorate. On the other hand, if the content of the oxygen barrier polymer (C) is more than 98.9 weight %, the content of the thermoplastic resin (A) and the compatibilizer (D) is small, so that the oxygen scavenging function may deteriorate, and the stability of the morphology of the entire resin composition may be impaired. In one embodiment, the content of the thermoplastic resin (A) is more than about 2 to 19.5 weight %, and in particular from about 3 to 14 weight %. The content of the oxygen barrier polymer (C) is generally from about 80 to 97.5 weight %, and in particular from about 85 to 96 weight %. The content of the compatibilizer (D) is typically about 18 to 0.5 weight %, and in particular from about 1 to 12 weight %.

In some embodiments, the active oxygen barrier layer can contain an antioxidant. Suitable antioxidants may include 2,5-di-tert-butylhydroquinone, 2,6-di-tert-butyl-p-cresol, 4,4,'-thiobis(6-tert-butylphenol), 2,2'-methylene-bis(4-methyl-6-tert-butylphenol), octadecyl-3-(3',5'-di-tert-butyl-4'-hydroxyphenyl)propionate, 4,4'-thiobis(6-tert-butylphenol), 2-tert-butyl-6-(3-tert-butyl-2-hydroxy-5-methylbenzyl)-4-methylphenylacrylate, pentaerythritoltetrakis(3-laurylthiopropionate), 2,6-di-(tert-butyl)-4-methylphenol (BHT), 2,2-methylenebis(6-tert-butyl-p-cresol), triphenyl phosphite, tris(nonylphenyl) phosphite, dilauryl thiodipropionate, or the like.

The amount of the antioxidant to be present in the active oxygen barrier composition is readily determined through experimentation as appropriate, in view of the kinds and the contents of components of the resin composition, and the use and the storage conditions of the resin composition, and the like. In general, the amount of the antioxidant is typically from about 0.01 to 1% by weight, and in particular from about 0.02 to 0.5% by weight, based on the total weight of the active oxygen barrier composition. If the amount of the antioxidant is too small, the reaction with oxygen may proceed extensively during storage or melt-kneading of the active oxygen barrier composition, so that the oxygen scavenging function may be lowered before the resin composition of the present invention is actually put to use. If the amount of the antioxidant is large, the reaction of the active oxygen barrier composition with oxygen can be inhibited, so that the oxygen scavenging function of the resin composition of the present invention will not be immediately active upon manufacture. In such cases, it may be desirable to further incorporate a photoinitiator into the composition and activate the composition at a later point in time with actinic radiation. Suitable photoinitiators and methods of triggering using actinic radiation are disclosed in U.S. Patent Nos. 5,211,875; 6,139,770; 6,254,802; and 7,153,891.

Other polymeric compositions that may be used in the active oxygen barrier layer may include barrier polymers having an unsaturated organic moiety blended therein, such as nylons including both amorphous and semi-crystalline nylons.

The core layer may also include one or more additional ingredients such as a compatibilizer, antioxidants, heat stabilizers, and the like.

As noted above, the active oxygen barrier composition comprises an unsaturated ethylenically unsaturated polymer that is capable of binding with oxygen molecules passing through the film. The active oxygen barrier composition of the present invention may react with oxygen immediately upon fabrication of the composition or shortly thereafter. As such, it will be protected from excessive exposure to oxygen until the multilayered film of the invention is produced. The multilayered film of the invention will also be protected from excessive exposure to oxygen until it is used.

### Examples

Several film structures in accordance with the invention, and comparatives, are identified below. Materials used were as indicated in Table 1.

**Table 1**

| Resin Identification | | |
|---|---|---|
| | | |
| Material Code | Tradename Or Designation | Source(s) |
| AB1 | 10853™ | Ampacet |
| AB2 | (see description) | -------------- |
| AB3 | EASTAR™ 6763 CO235 | Eastman Chemical |
| AD1 | PLEXAR™ PX 1007™ | LyondeIIBaseII |
| AD2 | SPS-70™ | MSI Technology |
| AD3 | PLEXAR™ PX3227™ | LyondeIIBaseII |
| AD4 | ADMER™ AT 2146E™ | Mitsui Chemical |
| OB1 | EVAL™ F171B | EVALCA/Kuraray |
| OB2 | EVAL™ L171B | EVALCA/Kuraray |
| OB3 | EVAL™ E171B | EVALCA/Kuraray |
| AOB1 | EVAL™ XEP-1070B | EVALCA/Kuraray |
| AOB2 | EVAL™ XEP-1185 | EVALCA/Kuraray |
| PE1 | AFFINITY PL 1850G™ | Dow |
| PE2 | PE1042CS15™ | Flint Hills Resources |
| PE4 | SURPASS™ FPs317-A | Nova Chemical |
| PL1 | EASTAPAK™ 9921 | Eastman Chemical |
| SX1 | MB50-313™ | Dow Corning |

| | | |
|---|---|---|
| AB1 is a masterbatch having about 80% linear low density polyethylene, and about 20% of an antiblocking agent (diatomaceous earth). AB2 is a masterbatch having about 95.5% EVA (3.3% vinyl acetate) (PE1335™ from Flint Hills), about 3% amide wax (KEMAMIDE E ULTRABEAD™ from PMC-Biogenics), and about 1.5% of an antiblocking agent (calcined diatomaceous earth) (SUPERFINE SUPERFLOSS™ from Celite). AB3 is a masterbatch having crystalline silica in PETG (EASTAR™ 6763 from Eastman Chemical) as a carrier resin. AD1 is a maleic anhydride grafted polyolefin in EVA, with between 9% and 11% vinyl acetate monomer, and a melt index of 3.2, used as an adhesive or tie layer. AD2 is a compounded polymer blend comprising about 75% EVA and about 25% PP, used as a peelable layer. AD3 is a maleic anhydride grafted polyolefin in linear low density polyethylene, used as an adhesive or tie layer. AD4 is a maleic anhydride modified ethylene/octene copolymer, used as an adhesive or tie layer. OB1 is an ethylene/vinyl alcohol copolymer with 32 mole percent ethylene. OB2 is an ethylene/vinyl alcohol copolymer with 27 mole percent ethylene. OB3 is an ethylene/vinyl alcohol copolymer with 44 mole percent ethylene. AOB1 is an oxygen scavenging EVOH. It includes an EVOH (EVAL™ F171 B) compounded with an oxygen scavenging resin having carbon-carbon double bonds substantially in its main chain, and a transition metal (cobalt) salt as a catalyst. AOB2 is an oxygen scavenging EVOH. It includes an EVOH (EVAL™ F171 B) compounded with an oxygen scavenging resin having carbon-carbon double bonds substantially in its main chain, and a transition metal (cobalt) salt as a catalyst. PE1 is a single site catalyzed ethylene/1-octene copolymer with a density of 0.902 grams/cc, a melt index of 3.0, and an octene-1 comonomer content of 12%. PE2 is a low density polyethylene resin with a density of 0.922 grams/cc. PE4 is a single-site catalyzed ethylene/octene copolymer with a density of 0.916 grams/cc. PL1 is a copolyester. SX1 is a polysiloxane masterbatch in an LLDPE carrier resin with a density of 0.94 grams/cc. | | |

All compositional percentages given herein are by weight, unless indicated otherwise; except that the ethylene content of EVOH resins is given in mole %.

### Film structures

### Example 1 (Comparative)

A comparative multilayer film was made and had the following five-layer structure with a total film thickness of 89.4 µm (3.52 mils):

| | |
|---|---|
| Layer 1: | 88% PE1 + 8% AB1 + 4% SX1 (33% of total film thickness) |
| Layer 2: | 100% AD1 (4% of total film thickness) |
| Layer 3: | 100% AOB1 (11% of total film thickness) |
| Layer 4: | 100% AD1 (11% of total film thickness) |
| Layer 5: | 100% PE2 (41 % of total film thickness) |

The film was fully coextruded by a conventional extrusion process using an annular die, and then expanded while in a molten state to produce a blown film.

### Example 2 (Comparative)

A comparative multilayer film was made and had the following five-layer structure with a total film thickness of 89.2 µm (3.51 mils):

| | |
|---|---|
| Layer 1: | 88% PE1 + 8% AB1 + 4% SX1 (31.2% of total film thickness) |
| Layer 2: | 100% AD2 (13% of total film thickness) |
| Layer 3: | 100% AOB2 (11.5% of total film thickness) |
| Layer 4: | 100% AD2 (13% of total film thickness) |
| Layer 5: | 88% PE1 + 8% AB1 + 4% SX1 (31.3% of total film thickness) |

The film was fully coextruded by a conventional extrusion process using an annular die, and then expanded while in a molten state to produce a blown film.

### Example 3 (Comparative)

A comparative multilayer film was made and had the following five-layer structure with a total film thickness of 89.2 µm (3.51 mils):

| | |
|---|---|
| Layer 1: | 88% PE1 + 8% AB1 + 4% SX1 (31.2% of total film thickness) |
| Layer 2: | 100% AD3 (13% of total film thickness) |
| Layer 3: | 100% AOB1 (11.5% of total film thickness) |
| Layer 4: | 100% AD3 (13% of total film thickness) |
| Layer 5: | 88% PE1 + 8% AB1 + 4% SX1 (31.3% of total film thickness) |

The film was fully coextruded by a conventional extrusion process using an annular die, and then expanded while in a molten state to produce a blown film.

### Example 4 (Comparative)

A comparative multilayer film was made and had the following five-layer structure with a total film thickness of 89.2 µm (3.51 mils):

| | |
|---|---|
| Layer 1: | 88% PE1 + 8% AB1 + 4% SX1 (31.2% of total film thickness) |
| Layer 2: | 100% AD3 (13% of total film thickness) |
| Layer 3: | 100% AOB2 (11.5% of total film thickness) |
| Layer 4: | 100% AD3 (13% of total film thickness) |
| Layer 5: | 88% PE1 + 8% AB1 + 4% SX1 (31.3% of total film thickness) |

The film was fully coextruded by a conventional extrusion process using an annular die, and then expanded while in a molten state to produce a blown film.

Comparative examples 1 to 4 were made using a standard annular plate die, e.g., as described in U.S. Pat. No. 5,076,776.

### Example 5 (Comparative)

A comparative multilayer film was made and had the following seven-layer structure with a total film thickness of 152 µm (6.0 mils):

| | |
|---|---|
| Layer 1: | 90% PE4 + 10% AB2 (33% of total film thickness) |
| Layer 2: | 100% AD4 (5% of total film thickness) |
| Layer 3: | 100% OB1 (5% of total film thickness) |
| Layer 4: | 100% AOB2 (10% of total film thickness) |
| Layer 5: | 100% OB1 (5% of total film thickness) |
| Layer 6: | 100% AD4 (5% of total film thickness) |
| Layer 7: | 98% PL1 + 2% AB3 (37% of total film thickness) |

The film was fully coextruded by a conventional extrusion process using a flat cast die, and then quenched as the film exited the die with water or a cooled roller to produce a cast film.

### Example 6 (Comparative)

A comparative multilayer film was made and had the following seven-layer structure with a total film thickness of 152 µm (6.0 mils):

| | |
|---|---|
| Layer 1: | 90% PE4 + 10% AB2 (33% of total film thickness) |
| Layer 2: | 100% AD4 (5% of total film thickness) |
| Layer 3: | 100% AOB2 (5% of total film thickness) |
| Layer 4: | 100% AOB2 (10% of total film thickness) |
| Layer 5: | 100% AOB2 (5% of total film thickness) |
| Layer 6: | 100% AD4 (5% of total film thickness) |
| Layer 7: | 98% PL1 + 2% AB3 (37% of total film thickness) |

The film was fully coextruded by a conventional extrusion process using a flat cast die, and then quenched as the film exited the die with water or a cooled roller to produce a cast film.

### Example 7

A multilayer film in accordance with the present invention was made and had the following twenty nine-layer structure, with a total film thickness of 89 µm (3.5 mils):

| | |
|---|---|
| Layer 1: | 88% PE1 + 8% AB1 + 4% SX1 (32% of total film thickness) |
| Layers 2: | 100% AD1 (4% of total film thickness) |
| Layers 3, 5, 7, 9, 11, 13, 15, 17, 19, 21, 23, 25, 27: | 100% OB1 (3% of total film thickness) |
| Layers 4, 6, 8, 10, 12, 14, 16, 18, 20, 22, 24, 26: | 100% AOB1 (9% of total film thickness) |
| Layer 28: | 100% AD1 (11% of total film thickness) |
| Layer 29: | 100% PE2 (41 % of total film thickness) |

The film was fully coextruded and produced via a blown bubble process as in Example 1 above. However, the film was first coextruded with an annular 29-layer multilayer die. The die was as described above and illustrated in FIG. 2, except that the microlayer assembly included a total of 25 microlayer distribution plates. Fluidized (molten) polymer was supplied to each of the microlayer distribution plates. Fluidized polymer was supplied only to distribution plates 32a, b, d, and e; no polymer was supplied to plate 32c. The resultant 29-layer structure comprised a core with 25 microlayers (layers 3-27), plus 4 thicker layers (layers 1-2 and 28-29). Thick layers 1-2 were positioned on one side of the core and thick layers 28-29 were positioned on the other side of the core, with layer 1 forming one of the outer layers and layer 29 forming the other outer layer.

The microlayers were extruded such that layers of OB1 alternated with layers of AOB1, so that the microlayer section of the film exhibited the structure: OB1/AOB1/OB1/AOB1/OB1/AOB1 ... OB1/AOB1/OB1

The microlayers comprising AOB1 were about three times as thick as the microlayers comprising OB1.

### Example 8

A multilayer film in accordance with the present invention was made by the process described above for Inventive Example 7, and had the following twenty nine-layer structure, with a total film thickness of 89 µm (3.5 mils):

| | |
|---|---|
| Layer 1: | 88% PE1 + 8% AB1 + 4% SX1 (32% of total film thickness) |
| Layers 2: | 100% AD1 (4% of total film thickness) |
| Layers 3, 5, 7, 9, 11, 13, 15, 17, 19, 21, 23, 25, 27: | 100% OB1 (6% of total film thickness) |
| Layers 4, 6, 8, 10, 12, 14, 16, 18, 20, 22, 24, 26: | 100% AOB1 (6% of total film thickness) |
| Layer 28: | 100% AD1 (11% of total film thickness) |
| Layer 29: | 100% PE2 (41 % of total film thickness) |

The microlayers were extruded such that layers of OB1 alternated with layers of AOB1, so that the microlayer section of the film exhibited the structure:
OB1/AOB1/OB1/AOB1/OB1/AOB1 ... OB1/AOB1/OB1

The microlayers comprising AOB1 were about the same thickness as the microlayers comprising OB1.

### Example 9

A multilayer film in accordance with the present invention was made by the process described above for Inventive Example 7, and had the following twenty nine-layer structure, with a total film thickness of 89 µm (3.5 mils):

| | |
|---|---|
| Layer 1: | 88% PE1 + 8% AB1 + 4% SX1 (32% of total film thickness) |
| Layers 2: | 100% AD1 (4% of total film thickness) |
| Layers 3-27: | 100% AOB1 (12% of total film thickness) |
| Layer 28: | 100% AD1 (11% of total film thickness) |
| Layer 29: | 100% PE2 (41 % of total film thickness) |

### Example 10

A multilayer film in accordance with the present invention was made by the process described above for Inventive Example 7, and had the following twenty nine-layer structure, with a total film thickness of 89 µm (3.5 mils):

| | |
|---|---|
| Layer 1: | 88% PE1 + 8% AB1 + 4% SX1 (32% of total film thickness) |
| Layers 2: | 100% AD1 (4% of total film thickness) |
| Layers 3-27: | 50% AOB1 + 50% OB1 (12% of total film thickness) |
| Layer 28: | 100% AD1 (11% of total film thickness) |
| Layer 29: | 100% PE2 (41% of total film thickness) |

Each of microlayers 3 to 27 was a blend of 50% AOB1 + 50% OB1.

### Example 11

A multilayer film in accordance with the present invention was made by the process described above for Inventive Example 7, and had the following twenty nine-layer structure, with a total film thickness of 89 µm (3.5 mils):

| | |
|---|---|
| Layer 1: | 88% PE1 + 8% AB1 + 4% SX1 (32% of total film thickness) |
| Layers 2: | 100% AD1 (4% of total film thickness) |
| Layers 3-27: | 30% AOB1 + 70% OB1 (12% of total film thickness) |
| Layer 28: | 100% AD1 (11% of total film thickness) |
| Layer 29: | 100% PE2 (41% of total film thickness) |

Each of microlayers 3 to 27 was a blend of 30% AOB1 + 70% OB1.

### Example 12

A multilayer film in accordance with the present invention was made by the process described above for Inventive Example 7, and had the following twenty nine-layer structure, with a total film thickness of 89 µm (3.5 mils):

| | |
|---|---|
| Layers 1,29: | 88% PE1 + 8% AB1 + 4% SX1 (each layer = 31% of total film thickness) |
| Layers 2,28: | 100% AD2 (each layer = 13% of total film thickness) |
| Layers 3-27: | 100% AOB2 (12% of total film thickness) |

### Example 13

A multilayer film in accordance with the present invention was made by the process described above for Inventive Example 7, and had the following twenty nine-layer structure, with a total film thickness of 89 µm (3.5 mils):

| | |
|---|---|
| Layers 1,29: | 88% PE1 + 8% AB1 + 4% SX1 (each layer = 31% of total film thickness) |
| Layers 2,28: | 100% AD3 (each layer = 13% of total film thickness) |
| Layers 3, 5, 7, 9, 11, 13, 15, 17, 19, 21, 23, 25, 27: | 100% OB1 (9% of total film thickness) |
| Layers 4, 6, 8, 10, 12, 14, 16, 18, 20, 22, 24, 26: | 100% AOB1 (3% of total film thickness) |

The microlayers were extruded such that layers of OB1 alternated with layers of AOB1, so that the microlayer section of the film exhibited the structure:
OB1/AOB1/OB1/AOB1/OB1/AOB1 ... OB1/AOB1/OB1

The microlayers comprising OB1 were about three times as thick as the microlayers comprising AOB1.

### Example 14

A multilayer film in accordance with the present invention was made by the process described above for Inventive Example 7, and had the following twenty nine-layer structure, with a total film thickness of 89 µm (3.5 mils):

| | |
|---|---|
| Layers 1,29: | 88% PE1 + 8% AB1 + 4% SX1 (each layer = 31% of total film thickness) |
| Layers 2,28: | 100% AD3 (each layer = 13% of total film thickness) |
| Layers 3-27: | 100% AOB1 (12% of total film thickness) |

### Example 15

A multilayer film in accordance with the present invention was made by the process described above for Inventive Example 7, and had the following twenty nine-layer structure, with a total film thickness of 89 µm (3.5 mils):

| | |
|---|---|
| Layers 1,29: | 88% PE1 + 8% AB1 + 4% SX1 (each layer = 31% of total film thickness) |
| Layers 2,28: | 100% AD3 (each layer = 13% of total film thickness) |
| Layers 3, 5, 7, 9, 11, 13, 15, 17, 19, 21, 23, 25, 27: | 100% OB2 (9% of total film thickness) |
| Layers 4, 6, 8, 10, 12, 14, 16, 18, 20, 22, 24, 26: | 100% AOB1 (3% of total film thickness) |

The microlayers were extruded such that layers of OB2 alternated with layers of AOB1, so that the microlayer section of the film exhibited the structure:
OB2/AOB1/OB2/AOB1/OB2/AOB1 ... OB2/AOB1/OB2

The microlayers comprising OB2 were about three times as thick as the microlayers comprising AOB1.

### Example 16

A multilayer film in accordance with the present invention had the following fifty-two layer structure, with a total film thickness of 152 µm (6.0 mils):

| | |
|---|---|
| Layer 1: | 90% PE4 + 10% AB2 (33% of total film thickness) |
| Layer 2: | 100% AD4 (5% of total film thickness) |
| Layers 3 -50: | 100% AOB2 (20% of total film thickness) |
| Layer 51: | 100% AD4 (5% of total film thickness) |
| Layer 52: | 98% PL1 + 2% AB3 (37% of total film thickness) |

The film of Example 16 was fully coextruded by an extrusion process using a flat cast die, as in Example 5 (Comparative) and then quenched as the film exited the die with water or a cooled roller to produce a cast film; except that the extrusion process utilized multiplier technology. This technology, available from Extrusion Dies Industries LLC (EDI) of Chippewa Falls, Wisconsin, involves an extrusion die, coextrusion feedblocks, and a layer multiplier. In this process, output from a coextrusion feedblock is sliced into lanes of narrower coextrusion "sandwiches" that are subsequently stacked upon each other, resulting in a structure with repeating sequences of the layers that were originally combined in the feedblock. Briefly, with this technology a first sub-sequence of microlayers, or unit (a'), consisting of e.g. 9 microlayers, is coextruded using the conventional coextrusion equipment, the multilayer melt flow corresponding to this first unit (a') is split longitudinally into a number of packets, for example three or four, each having the same number and sequence of layers corresponding to that of the first unit; the packets are then recombined, stacked one on top of the other, to provide for a sequence of three or four repeating units, i.e.,(a')_{3 or 4}. The combined melt flow of a microlayer sequence of three or four repeating units, (a')_{3 or 4}, can then be split once more for example into three or four packets that are then re-combined and stacked one on top of the other, thus giving, in this specific example, structures with 9, or 12, or 16 repeating units, (a')_{9 or 12 or 16}. In their turn these can still be split and recombined one or more times to provide for the final desired sequence (a). When the multiplier technology is used, the sequence (a) will therefore be a repetition of a number n of identical multilayer sub-sequences or units, (a')ₙ, where the microlayers composing the repeating unit (a') can be identical or different, depending on the configuration and setting of the first extrusion equipment, and where the number n of identical repeating units depends on the number of packets formed in each splitting step and on the number of splitting steps.

A further description of layer multiplication can be found in the paper "Improved Flexible Packaging Film Barrier Performance via Layer Multiplication" by luliano et al.

### Example 17

A multilayer film in accordance with the present invention was made by the process described above for Inventive Example 16, and had the following fifty-two layer structure, with a total film thickness of 152 µm (6.0 mils):

| | |
|---|---|
| Layer 1: | 90% PE4 + 10% AB2 (33% of total film thickness) |
| Layer 2: | 100% AD4 (5% of total film thickness) |
| Layers 3, 5, 7, 9, 11, 13, 15, 17, 19, 21, 23, 25, 27, 29, 31, 33, 35, 37, 39, 41, 43, 45, | |
| | 47, and 49 = 100% OB1 (10% of total film thickness) |
| Layers 4, 6, 8, 10, 12, 14, 16, 18, 20, 22, 24, 26, 28, 30, 32, 34, 36, 38, 40, 42, 44, 46, | |
| | 48, and 50 = 100% AOB2 (10% of total film thickness) |
| Layer 51: | 100% AD4 (5% of total film thickness) |
| Layer 52: | 98% PL1 + 2% AB3 (37% of total film thickness) |

The microlayer section of the film, layers 3 to 50, was thus made up of alternating microlayers of OB1 and AOB1.

Some of the film examples of the invention, as well as some of the comparative examples, were evaluated with respect to their melting and second heat melting points. This was done to reflect the relative melting points of the various film examples, the melting points reflective of the degree of crystallinity of the EVOH in the film structure. It is known that increased crystallinity in EVOH indicates increased oxygen barrier properties (lower oxygen transmission rate, or OTR).

**TABLE 2**

| DSC¹-EVOH Peaks for Examples | | | | |
|---|---|---|---|---|
| | | | | |
| | EX. 1 | EX. 9 | EX. 3 | EX. 14 |
| 1^{st} Heat Melting Point (°C) | 171.9 | 180.1 | 176.5 | 180.2 |
| Cooling Recrystallization Temperature (°C) | N/A | 154.3 | 146.8 | 154.7 |
| 2^{nd} Heat Melting Point (°C) | N/A | 178.5 | 174.8 | 180.7 |

| | | | | |
|---|---|---|---|---|
| ¹ *"DSC" refers to differential scanning calorimetry.* | | | | |

The data in Table 2 shows that the two blown film samples produced with annular microlayers exhibited significantly higher melting and recrystallization temperatures as compared to equivalent film samples produced on a standard die. This indicates that the microlayered films had increased crystallinity versus the comparative examples and are therefore expected to have improved oxygen barrier properties.

**TABLE 3**

| DSC-EVOH Peaks for Examples/Aged Films | | |
|---|---|---|
| | EX. 3 | EX. 14 |
| 1^{st} Heat Melting Point (°C) | 171.5 | 176.1 |
| Cooling Recrystallization Temperature (°C) | 136.7 | 144-151 |
| 2^{nd} Heat Melting Point (°C) | 162.6 | 174-179 |

The films from examples 3 and 14 were aged at standard ambient conditions for several months and the DSC tests repeated. The data in Table 3 shows that the blown film sample produced on the annular microlayer die continued to exhibit higher melting and recrystallization temperatures than the equivalent film produced with a standard die. This indicates that the microlayered film possesses greater crystallinity than the comparative example and therefore will have improved oxygen barrier properties. When comparing the DSC results for identical films in tables 2 and 3, significant reductions in melting and recrystallization temperatures are observed for the aged films. The active oxygen barrier material is believed to oxidize with aging, thus having less crystallinity.

**TABLE 4**

| DSC-EVOH Peaks for Examples¹ | | | | |
|---|---|---|---|---|
| | EX. 5 | EX. 17 | EX. 6 | EX. 16 |
| 1^{st} Heat Melting Point (°C) | 179.4 | 179.6 | 178.9 | 179.1 |
| Cooling Recrystallization Temperature (°C) | 141.6 | 146.6 | 142.6 | 143.6 |
| 2^{nd} Heat Melting Point (°C) | 172.3 | 176.4 | 172.9 | 174.3 |

| | | | | |
|---|---|---|---|---|
| ¹ *These films were produced by layer multiplication process per EDI die technology.* | | | | |

The DSC data in Table 4 provides a comparison of melting and recrystallization temperatures for flat cast films produced with standard and multiplication die technologies. The multiplied film samples show slightly higher melting and recrystallization temperatures which indicates increased crystallinity which will increase oxygen barrier properties.

**TABLE 5**

| DSC-EVOH Peaks for Examples¹/Aged Films | | | | |
|---|---|---|---|---|
| | EX. 5 | EX. 17 | EX. 6 | EX. 16 |
| 1^{st} Heat Melting Point (°C) | 179.9 | 179.6 | 178.9 | 179.4 |
| Cooling Recrystallization Temperature (°C) | 147.5 | 149.1 | 147.3 | 147.3 |
| 2^{nd} Heat Melting Point (°C) | 177.9 | 178.4 | 176.9 | 177.4 |

| | | | | |
|---|---|---|---|---|
| ¹ *These films were produced by layer multiplication process per EDI die technology.* | | | | |

The films from examples 5, 6, 16, and 17 were aged at standard room temperature conditions for several months. The data in Table 5 outlines the DSC results for the aged film samples noted in Table 4. The data shows that the multiplied film samples consistently have higher melting temperatures than the equivalent films produced with standard die technology. Higher melting points indicate increased crystallinity which increases oxygen barrier properties. When the DSC results from Tables 4 and 5 are compared for identical film samples, it is apparent that aged films which contain AOB2 have increased melting temperatures as compared to fresher films. These results are contrary to those obtained with the annular die technologies.

**TABLE 6**

| DSC-EVOH Peaks for Examples Fresh (1^{st} two columns) and Aged (last two columns) Films EVOH layers removed via peeling | | | | | |
|---|---|---|---|---|---|
| | EX. 2 | EX. 12 | EX.2 | EX. 12 | |
| 1^{st} Heat Melting Point (°C) | 180.4 | 181.8 | 179.0 | 179.9 | |
| Cooling Recrystallization Temperature (°C) | 153.8 | 155.5 | 148.7 | 150.6 | |
| 2^{nd} Heat Melting Point (°C) | 180.1 | 182.0 | 177.8 | 179.4 | |

The DSC results provided in Table 6 represent the melting and recrystallization temperatures for the AOB2 layers only of films from examples 2 and 12. These films were produced on annular blown film dies. The AOB2 containing layers were peeled from the remainder of the film at the AD2 interfaces. These films were aged as well at standard room conditions and the DSC tests were repeated. The film samples produced with microlayers exhibited slightly higher melting and recrystallization temperatures which indicates increased crystallinity and is therefore expected to have improved barrier properties as compared to the film produced with the standard die. Similar aging effect which translates into lower melting temperatures is observed for these film samples. These results are consistent with those observed for the DSC results tabulated in Tables 2 and 3.

**TABLE 7**

| OTR¹ for Examples | | | | | | |
|---|---|---|---|---|---|---|
| (cc/m²-day- atm.) | | | | | | |
| OTR test conditions² | EX. 1 | EX. 9 | EX. 3 | EX. 14 | EX.13 | EX.15 |
| 0% RH/in 0% RH/out | <0.2 | <0.2 | <0.2 | <0.2 | | |
| 100% RH/in 100% RH/out | 90 | 70 | ---- | ---- | 55 | <1.0 |
| 100% RH/in 50% RH/out | 1.8 & 3.49 | <0.2 | <0.2 | <0.2 | 56 | <0.2 |

| | | | | | | |
|---|---|---|---|---|---|---|
| ¹ *"OTR" refers to oxygen transmission rate, measured per ASTM D3985. OTR measurements were taken 15 days after production, using a MOCON oxygen analyzer.* ² *"RH" = relative humidity. Oxygen transmission testing at variable RH levels is carried out using aqueous salt solutions to generate the desired RH. The salt solutions are prepared according to ASTM E104. The solution is maintained on filter paper which is sandwiched between the sample and a high OTR polymer film. Humidity may be controlled by applying the technique to one or both sides of the sample.* | | | | | | |

**TABLE 8**

| OTR for Examples | | | | |
|---|---|---|---|---|
| (cc/m²-day-atm) | | | | |
| OTR test Conditions | EX. 5 | EX. 17 | EX. 6 | EX. 16 |
| 0% RH/in 0% RH/out | <0.2 | <0.2 | <0.2 | <0.2 |
| 100% RH/in 100% RH/out | 8.62 | 23.1 | 4.43 | 5.24 |
| 100% RH/in 50% RH/out | <0.2 | <0.2 | <0.2 | <0.2 |

Looking at the OTR data in Tables 7 and 8, all of the samples showed excellent barrier performance at 0% RH. It is known, however that moisture has a detrimental effect on the performance of EVOH. As the EVOH resin absorbs moisture at higher humidity, the oxygen permeability of the film increases. Above 60% RH the OTR rapidly begins increasing for these EVOH resins and above 80% the effect is severe.

OTR testing is a short duration test during which samples are subjected to the test temperature and relative humidity, allowed to equilibrate, and oxygen permeation is reported. Since films from this invention contain active oxygen scavenging resins, the oxygen scavenger in the active barrier may or may not be fully oxidized at the end of the test. Therefore, OTR results may vary due to differences in the oxidation rates of the active barrier resins in the films.

### Oxygen Ingress

Several of the comparative examples, and examples of the invention, were made into pouches, filled, sealed, and tested to determine the rate at which oxygen entered the filled pouch.

### Oxygen Ingress Testing Protocol

Pouch samples using films of the present invention (prepared by the microlayer die as disclosed herein) and comparative pouch samples using film prepared by conventional die technology, were prepared as follows.

Six (6) pouches of each film sample were made. Each pouch was made using an impulse sealer to seal three sides of a folded or tubular piece of film to yield a pouch with dimensions of about 4" x 9". Each pouch was labeled, and a small piece of tape was placed on the outside of each pouch, to function as a sampling port. Then, 30 milliliters of deionized water was added to each pouch before sealing the fourth side of the pouch on a KOCH™ vacuum sealer, creating a final closed, filled pouch having a size of about 4" x 7".

Next, 300 cubic centimeters of house nitrogen was then injected into each pouch through a flow meter and a Time Zero headspace sample was immediately taken to measure initial oxygen concentration on a Mocon PAC CHECK™ Model 650 Dual Headspace analyzer. The six pouch of each film sample were aged: three (3) at room temperature, and three (3) at elevated temperatures (40°C in a migration oven), and all pouches were tested periodically for oxygen ingress into the pouch, with results recorded in a lab notebook. Storage of the pouches in heated oven conditions accelerates aging by increasing the OTR and oxygen scavenging rate of the EVOH layers thus decreasing the time required to show trends. The results of oxygen ingress testing are shown in Tables 9 to 13.

**TABLE 9**

| Oven (40°C) Oxygen Ingress for Pouches of Blown Film Examples (data reported in % oxygen) | | | | | |
|---|---|---|---|---|---|
| Day | EX. 3 | EX. 4 | EX. 13 | EX. 14 | EX. 15 |
| 3 | 0.0274 | 0.0343 | 0.0070 | 0.0534 | 0.0048 |
| 8 | 0.0105 | 0.0569 | 0.0054 | 0.0045 | 0.0079 |
| 14 | 0.0198 | 0.0713 | 0.087 | 0.02 | 0.0373 |
| 20 | 0.0495 | 0.0916 | 0.0520 | 0.01 | 0.0293 |
| 28 | 0.2957 | 0.17 | 0.0284 | 0.0038 | 0.0489 |
| 35 | 0.5097 | 0.278 | 0.0589 | 0.0177 | 0.0805 |
| 49¹ | 1.1333 | 0.6643 | 0.1425 | 0.0708 | 0.1537 |

| | | | | | |
|---|---|---|---|---|---|
| ¹ *between 35 days and 49 days, the pouches dried out. The test was terminated after 49 days.* | | | | | |

The data in Table 9 shows that pouches made from film of examples 3 and 4 which were produced on a standard annular blown film die, showed a decrease in their barrier properties after about 20 days and began to allow oxygen to ingress into the pouches. The three microlayered samples, Ex. 13, Ex. 14 and Ex. 15 all showed substantially improved barrier performance despite having comparable or significantly less oxygen scavenger material than comparatives. Examples 13 and 15, which contain alternating microlayers of EVOH (OB1 or OB2) and active oxygen barrier (AOB1), have performance substantially similar to ex. 14, which contains 100% microlayered AOB1 in the microlayers. Thus half as much active oxygen barrier material can be used in the microlayered structure with similar overall oxygen ingress results.

**TABLE 10**

| Oven (40°C) Oxygen Ingress for Pouches of Blown Film Examples (Values given in Percent Oxygen) | | | | |
|---|---|---|---|---|
| | Day | EX. 1 | EX. 9 | |
| | 0 | 0.1 | 0.1 | |
| | 1 | 0.13 | 0.12 | |
| | 7 | 0.97 | 0.13 | |
| | 14 | 2.23 | 0.15 | |
| | 21 | 4.1 | 0.4 | |
| | 35 | 7.18 | 0.93 | |
| | 42 | 8.47 | 1.32 | |
| | 56 | 10 | 2.74 | |
| | 70 | 11.4 | 4.67 | |
| | 99¹ | 12.6 | 6.42 | |
| | 176 | 13.9 | 7.66 | |

| | | | | |
|---|---|---|---|---|
| ¹*all samples dried out between 70 and 99 days. The test was continued to day* 176. | | | | |

The data in Table 10 shows that the microlayered structure, Ex.9, containing the AOB1 has a significantly slower rate of oxygen ingress than the comparative example 1 and confirms that microlayering of the AOB1 has a benefit by lowering oxygen ingress.

**TABLE 11**

| Room Temperature Oxygen Ingress for Pouches of Blown Film Examples (Values given in Percent Oxygen) | | | | |
|---|---|---|---|---|
| | Day | EX. 1 | EX. 9 | |
| | 0 | 0.185 | 0.104 | |
| | 1 | 0.193 | 0.122 | |
| | 7 | 0.172 | 0.11 | |
| | 14 | 0.16 | 0.11 | |
| | 21 | 0.153 | 0.107 | |
| | 35 | 0.154 | 0.082 | |
| | 42 | 0.162 | 0.078 | |
| | 56 | 0.245 | 0.075 | |
| | 70 | 0.338 | 0.0635 | |
| | 99 | 0.784 | 0.0329 | |
| | 176 | 2.89 | 0.206 | |

The data in Table 11 shows that the microlayered structure, Ex.9, has significantly decreased oxygen ingress as compared to the Ex. 1 film which was produced with standard die technology. At room temperature test conditions, the standard structure showed good barrier performance through day 56, at which point the active barrier began to deplete and oxygen ingress began to increase into the pouch. In contrast, the microlayered example, Ex. 9, maintained low oxygen ingress throughout the test.

**TABLE 12**

| Oven (40°C) Oxygen Ingress for Pouches of Blown Film Examples (Values given in Percent Oxygen) | | | | | |
|---|---|---|---|---|---|
| Day | EX. 5 | EX. 6 | EX. 16 | EX. 17 | |
| 0 | 0.18 | 0.04 | 0.03 | 0.38 | |
| 1 | 0.21 | 0.08 | 0.06 | 0.40 | |
| 7 | 0.13 | 0.07 | 0.05 | 0.38 | |
| 14 | 0.20 | 0.07 | 0.05 | 0.38 | |
| 44 | 0.30 | 0.09 | 0.05 | 0.57 | |
| 87 | 0.35 | 0.18 | 0.13 | 0.61 | |

The data in Table 12 shows very little difference in the oxygen ingress for the test period. These films contain 1.2 mil of AOB2 and/or OB1 which will significantly limit the oxygen ingress therefore the samples must be analyzed for longer storage periods to distinguish differences in the ingress performance.

**TABLE 13**

| Room Temperature Oxygen Ingress for Pouches of Blown Film Examples (Values given in Percent Oxygen) | | | | | | |
|---|---|---|---|---|---|---|
| | Day | EX. 5 | EX. 6 | EX. 16 | EX. 17 | |
| | 0 | 0.05 | 0.08 | 0.07 | 0.08 | |
| | 1 | 0.08 | 0.11 | 0.10 | 0.12 | |
| | 7 | 0.06 | 0.09 | 0.09 | 0.05 | |
| | 14 | 0.06 | 0.09 | 0.09 | 0.11 | |
| | 44 | 0.05 | 0.09 | 0.08 | 0.12 | |
| | 87 | 0.02 | 0.06 | 0.04 | 0.10 | |

The data in Table 13 shows very little ingress for any of the samples at room temperature compared to that seen under accelerated oven conditions (Table 12). This test would need to run much longer before definite trends would be seen.

## Claims

1. A multilayer oxygen barrier film comprising:
a) a microlayer section comprising a plurality of microlayers, wherein at least one of the plurality of microlayers comprises a passive oxygen barrier comprising ethylene/vinyl alcohol copolymer, and at least one of the plurality of microlayers comprises a second oxygen barrier; and
b) a bulk layer, wherein each of the microlayers has a thickness that is less than that of the bulk layer;
**characterized in that** the second oxygen barrier comprises an active oxygen barrier comprising a blend of a thermoplastic resin (a) having carbon-carbon double bonds substantially in its main chain, a transition metal salt (b), and an oxygen barrier polymer (c), wherein
the thermoplastic resin (a) comprises at least one of the units represented by formula (I) and formula II: 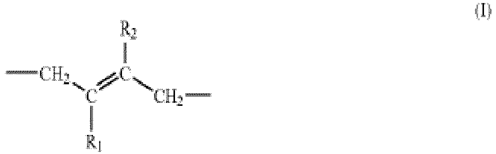 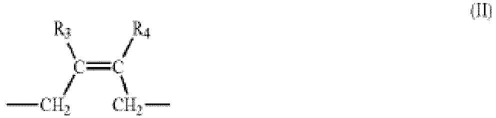 wherein R1, R2, R3 and R4 are the same or different, a hydrogen atom, an alkyl group that may be substituted, an aryl group that may be substituted, an alkylaryl group that may be substituted, -COOR5, -OCOR6, a cyano group or a halogen atom, and R3 and R4 may together form a ring via a methylene group or an oxymethylene group, where R5 and R6 are an alkyl group that may be substituted, an aryl group that may be substituted or an alkylaryl group that may be substituted,
the transition metal salt (b) is selected from the group consisting of an iron salt, a nickel salt, a copper salt, a manganese salt, a cobalt salt, and combinations thereof, and
the oxygen barrier polymer (c) is selected from the group consisting of polyvinyl alcohol, ethylene vinyl alcohol copolymer, polyamide, polyvinyl chloride and its copolymers, polyvinylidene dichloride and its copolymers, polyacrylonitrile and its copolymers, polyethylene naphthenate and its copolymers, polyethylene terephthalate and its copolymers, and combinations thereof.

2. The film of claim 1 wherein the microlayer section comprises at least one microlayer comprising a blend of the active oxygen barrier and the passive oxygen barrier, and at least one microlayer comprising the passive oxygen barrier.

3. The film of claim 1 wherein the microlayer section comprises a repeating sequence of layers represented by the structure "A/B", wherein "A" represents a series of microlayers comprising the active oxygen barrier; and "B" represents a series of microlayers comprising the passive oxygen barrier.

4. The film of claim 3 wherein the microlayer section comprises between 10 and 3,000 microlayers arranged in the repeating sequence of claim 3.

5. A method of making a multilayer oxygen barrier film comprising:
a. coextruding a plurality of microlayers to form a microlayer section, at least one of the plurality of microlayers comprising a passive oxygen barrier comprising ethylene/vinyl alcohol copolymer, and at least one of the plurality of microlayers comprising a second oxygen barrier;
b. extruding a bulk layer, wherein each of the microlayers has a thickness that is less than that of the bulk layer; and
c. merging said bulk layer and said microlayer section to form a multilayer film;
**characterized in that**
i) the second oxygen barrier comprises an active oxygen barrier comprising a blend of a thermoplastic resin (a) having carbon-carbon double bonds substantially in its main chain, a transition metal salt (b), and an oxygen barrier polymer (c), wherein
the thermoplastic resin (a) comprises at least one of the units represented by formula (I) and formula II: 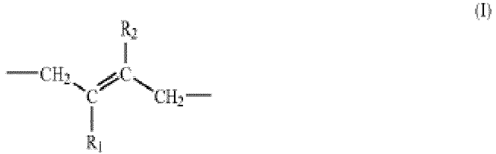 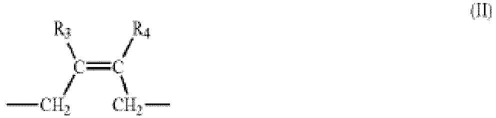 wherein R1, R2, R3 and R4 are the same or different, a hydrogen atom, an alkyl group that may be substituted, an aryl group that may be substituted, an alkylaryl group that may be substituted, -COOR5, - OCOR6, a cyano group or a halogen atom, and R3 and R4 may together form a ring via a methylene group or an oxymethylene group, where R5 and R6 are an alkyl group that may be substituted, an aryl group that may be substituted or an alkylaryl group that may be substituted,
the transition metal salt (b) is selected from the group consisting of an iron salt, a nickel salt, a copper salt, a manganese salt, a cobalt salt, and combinations thereof, and
the oxygen barrier polymer (c) is selected from the group consisting of polyvinyl alcohol, ethylene vinyl alcohol copolymer, polyamide, polyvinyl chloride and its copolymers, polyvinylidene dichloride and its copolymers, polyacrylonitrile and its copolymers, polyethylene naphthenate and its copolymers, polyethylene terephthalate and its copolymers, and combinations thereof;
ii) the bulk layer is extruded by directing a first polymer through a distribution plate and onto a primary forming stem, said distribution plate having a fluid inlet and a fluid outlet, the fluid outlet from said plate being in fluid communication with said primary forming stem and structured such that said first polymer is deposited onto said primary forming stem as a bulk layer;
iii) the plurality of microlayers is coextruded to form a microlayer section by directing at least a second polymer through a microlayer assembly, said microlayer assembly comprising a plurality of microlayer distribution plates and a microlayer forming stem, each of said microlayer plates having a fluid inlet and a fluid outlet, the fluid outlet from each of said microlayer plates being in fluid communication with said microlayer forming stem and structured to deposit a microlayer of polymer onto said microlayer forming stem, said microlayer plates being arranged to provide a predetermined order in which the microlayers are deposited onto said microlayer forming stem, thereby forming a substantially unified, microlayered fluid mass;
iv) the bulk layer and the microlayer section are merged to form a multilayer film by directing said microlayered fluid mass from said microlayer forming stem and onto said primary forming stem to merge said microlayered fluid mass with said bulk layer, thereby forming a multilayer film; and
v) the second polymer comprises the second oxygen barrier.

6. The method of claim 5 wherein the microlayer section comprises at least one microlayer comprising a blend of the active oxygen barrier and the passive oxygen barrier, and at least one microlayer comprising the passive oxygen barrier.

7. The method of claim 5 wherein the microlayer section comprises a repeating sequence of layers represented by the structure "A/B", wherein "A" represents a series of microlayers comprising the active oxygen barrier; and "B" represents a series of microlayers comprising the passive oxygen barrier.

8. The method of claim 7 wherein the microlayer section comprises between 10 and 3,000 microlayers arranged in the repeating sequence of claim 7.

9. The method of any one of claims 5 to 8 wherein said bulk layer is deposited onto said primary forming stem prior to the deposition of said microlayered fluid mass onto said primary forming stem such that said bulk layer is interposed between said microlayered fluid mass and said primary forming stem.

10. The method of any one of claims 5 to 9 further including the steps of
directing a third polymer through a second distribution plate to form a second bulk layer, and
merging said third polymer with said microlayered fluid mass such that said second bulk layer forms a second outer layer for said multilayer film.

## Patentansprüche

1. Mehrschichtfolie mit Sauerstoffbarriere umfassend
a) einen Mikroschichtabschnitt, der eine Vielzahl von Mikroschichten umfasst, wobei mindestens eine aus der Vielzahl von Mikroschichten eine passive Sauerstoffbarriere umfasst, die Ethylen/Vinylalkohol-Copolymer enthält, und mindestens eine aus der Vielzahl von Mikroschichten eine zweite Sauerstoffbarriere umfasst, und
b) eine Massenschicht, wobei jede der Mikroschichten eine Dicke aufweist, die geringer als die der Massenschicht ist,
**dadurch gekennzeichnet, dass** die zweite Sauerstoffbarriere eine aktive Sauerstoffbarriere umfasst, die ein Gemisch eines thermoplastischen Harzes (a), das im Wesentlichen Kohlenstoff-Kohlenstoff-Doppelbindungen in seiner Hauptkette aufweist, eines Übergangsmetallsalzes (b) und eines Sauerstoffbarrierepolymers (c) enthält, wobei
das thermoplastische Harz (a) mindestens eine der Einheiten umfasst, die durch Formel (I) und Formel (II) dargestellt sind: 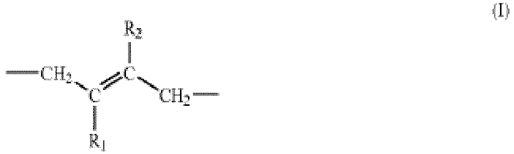 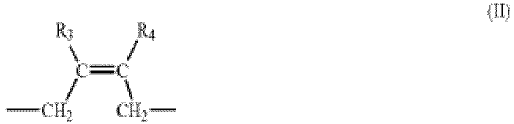 wobei R₁, R₂, R₃ und R₄ gleich oder verschieden ein Wasserstoffatom, eine Alkylgruppe, die substituiert sein kann, eine Arylgruppe, die substituiert sein kann, eine Alkyl-arylgruppe, die substituiert sein kann, -COOR₅, -COOR₆, eine Cyanogruppe oder ein Halogenatom sind und R₃ und R₄ zusammen einen Ring mittels einer Methylengruppe oder einer Oxymethylengruppe bilden können, wohin R₅ und R₆ eine Alkylgruppe, die substituiert sein kann, eine Arylgruppe, die substituiert sein kann, oder eine Alkylarylgrupe, die substituiert sein kann, sind,
wobei das Übergangsmetall (b) ausgewählt ist aus der Gruppe bestehend aus einem Eisensalz, einem Nickelsalz, einem Kupfersalz, einem Mangansalz, einem Cobaltsalz und Kombinationen davon, und
wobei das Sauerstoffbarrierepolymer (c) ausgewählt ist aus der Gruppe bestehend aus Polyvinylalkohol, Ethylen/Vinylalkohol-Copolymer, Polyamid, Polyvinylchlorid und seinen Copolymeren, Polyvinylidendichlorid und seinen Copolymeren, Polyacrylonitril und seinen Copolymeren, Polyethylennaphthenat und seinen Copolymeren, Polyethylenterephthalat und seinen Copolymeren und Kombinationen davon.

2. Folie nach Anspruch 1, bei der der Mikroschichtabschnitt mindestens eine Mikroschicht, die ein Gemisch der aktiven Sauerstoffbarriere und der passiven Sauerstoffbarriere enthält, und mindestens eine Mikroschicht, die die passive Sauerstoffbarriere enthält, umfasst.

3. Folie nach Anspruch 1, bei der der Mikroschichtabschnitt eine Wiederholungssequenz von Schichten umfasst, die mittels der Struktur "A/B" dargestellt ist, wobei "A" eine Abfolge von Mikroschichten darstellt, die die aktive Sauerstoffbarriere enthält, und "B" eine Abfolge von Mikroschichten darstellt, die die passive Sauerstoffbarriere enthält.

4. Folie nach Anspruch 3, bei der der Mikroschichtabschnitt zwischen 10 und 3000 Mikroschichten umfasst, die in der Wiederholungssequenz von Anspruch 3 angeordnet sind.

5. Verfahren zur Herstellung einer Mehrschichtfolie mit Sauerstoffbarriere, bei dem
a. eine Vielzahl von Mikroschichten unter der Bildung eines Mikroschichtenabschnitts coextrudiert wird, wobei mindestens eine aus der Vielzahl von Mikroschichten eine passive Sauerstoffbarriere umfasst, die ein Ethylen/Vinylalkohol-Copolymer enthält, und mindestens eine aus der Vielzahl von Mikroschichten eine zweite Sauerstoffbarriere enthält,
b. eine Massenschicht extrudiert wird, wobei jede der Mikroschichten eine Dicke aufweist, die geringer als die der Massenschicht ist, und
c. die Massenschicht und der Mikroschichtabschnitt unter Bildung einer Mehrschichtfolie vereint werden,
**dadurch gekennzeichnet, dass**
i) die zweite Sauerstoffbarrie eine aktive Sauerstoffbarriere umfasst, die ein Gemisch von einem thermoplastischen Harz (a), das im Wesentlichen Kohlenstoff-Kohlenstoff-Doppelbindungen in seiner Hauptkette aufweist, einem Übergangsmetall (b) und einem Sauerstoffbarrierepolymer (c) enthält, wobei das thermoplastische Harz (a) mindestens eine der Einheiten umfasst, die durch Formel (I) und Formel (II) dargestellt sind: 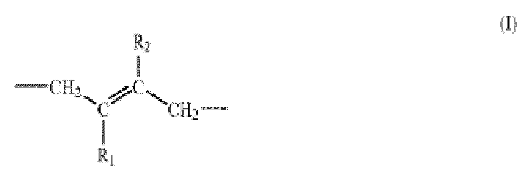 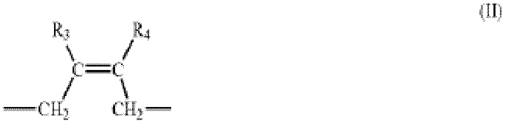 wobei R₁, R₂, R₃ und R₄ gleich oder verschieden ein Wasserstoffatom, eine Alkylgruppe, die substituiert sein kann, eine Arylgruppe, die substituiert sein kann, eine Alkylarylgruppe, die substituiert sein kann, -COOR₅, -COOR₆, eine Cyanogruppe oder ein Halogenatom sind und R₃ und R₄ zusammen einen Ring mittels einer Methylengruppe oder einer Oxymethylengruppe bilden können, wohin R₅ und R₆ eine Alkylgruppe, die substituiert sein kann, eine Arylgruppe, die substituiert sein kann,
oder eine Alkylarylgrupe, die substituiert sein kann, sind,
wobei das Übergangsmetall (b) ausgewählt ist aus der Gruppe bestehend aus einem Eisensalz, einem Nickelsalz, einem Kupfersalz, einem Mangansalz, einem Cobaltsalz und Kombinationen davon, und
wobei das Sauerstoffbarrierepolymer (c) ausgewählt ist aus der Gruppe bestehend aus Polyvinylalkohol, Ethylen/Vinylalkohol-Copolymer, Polyamid, Polyvinylchlorid und seinen Copolymeren, Polyvinylidendichlorid und seinen Copolymeren, Polyacrylonitril und seinen Copolymeren, Polyethylennaphthenat und seinen Copolymeren, Polyethylenterephthalat und seinen Copolymeren und Kombinationen davon,
ii) die Massenschicht extrudiert wird, indem ein erstes Polymer durch eine Verteilerplatte und auf einen ersten formgebenden Schaft geleitet wird, wobei die Verteilerplatte einen Fluideinlass und einen Fluidauslass aufweist, wobei der Fluidauslass der Platte in Fluidverbindung mit dem ersten formgebenden Schaft steht und so strukturiert ist, dass das erste Polymer auf dem ersten formgebenden Schaft als eine Masseschicht aufgebracht wird,
iii) die Vielzahl von Mikroschichten unter Bildung eines Mikroschichtabschnitts coextrudiert wird, indem mindestens ein zweites Polymer durch eine Mikroschichtstruktur geleitet wird, wobei die Mikroschichtstruktur eine Vielzahl von Mikroschichtverteilerplatten und einen Mikroschicht bildenden Schaft umfasst, wobei jede der Mikroschichtplatten einen Fluideinlass und einen Fluidauslass aufweist, wobei der Fluidauslass von jeder der Mikroschichtplatten in Fluidverbindung mit dem Mikroschicht bildenden Schaft steht und strukturiert ist, um eine Mikroschicht aus Polymer auf den Mikroschicht bildenden Schaft aufzubringen, wobei die Mikroschichtplatten angeordnet sind, um eine vorgegebene Reihenfolge bereitzustellen, in der die Mikroschichten auf den Mikroschicht bildenden Schaft aufgebracht werden, damit eine im Wesentlichen einheitliche mikrogeschichtete Fluidmasse gebildet wird,
iv) die Massenschicht und der Mikroschichtabschnitt vereint werden, um eine Mehrschichtfolie zu bilden, indem die mikrogeschichtete Fluidmasse von dem Mikroschicht bildenden Schaft und auf den ersten formgebenden Schafft geleitet wird, um die mikrogeschichtete Fluidmasse mit der Massenschicht zu vereinen, damit eine Mehrschichtfolie gebildet wird, und
v) das zweite Polymer die zweite Sauerstoffbarriere enthält.

6. Verfahren nach Anspruch 5, bei dem der Mikroschichtabschnitt mindestens eine Mikroschicht umfasst, die ein Gemisch aus der aktiven Sauerstoffbarriere und der passiven Sauerstoffbarriere enthält, und mindestens eine Mikroschicht die passive Sauerstoffbarriere enthält.

7. Verfahren nach Anspruch 5, bei dem der Mikroschichtabschnitt eine Wiederholungssequenz von Schichten umfasst, die durch die Struktur "A/B" dargestellt ist, wobei "A" eine Abfolge von Mikroschichten darstellt, die die aktive Sauerstoffbarriere enthält, und "B" eine Abfolge von Mikroschichten darstellt, die die passive Sauerstoffbarriere enthält.

8. Verfahren nach Anspruch 7, bei dem der Mikroschichtabschnitt zwischen 10 und 3000 Mikroschichten umfasst, die in der Wiederholungssequenz von Anspruch 7 angeordnet sind.

9. Verfahren nach einem der Ansprüche 5 bis 8, bei dem die Massenschicht auf den ersten formgebenden Schaft aufgebracht wird, bevor die mikrogeschichtete Fluidmasse auf den ersten formgebenden Schaft aufgebracht wird, so dass die Massenschicht zwischen der mikrogeschichteten Fluidmasse und dem ersten formgebenden Schaft eingefügt ist.

10. Verfahren nach einem der Ansprüche 5 bis 9, das ferner die Schritte einschließt, bei denen ein drittes Polymer durch eine zweite Verteilerplatte geleitet wird, um eine zweite Massenschicht zu bilden, und
das dritte Polymer mit der mikrogeschichteten Fluidmasse vereint wird, so dass die zweite Massenschicht eine zweite äußere Schicht für die Mehrschichtfolie bildet.

## Revendications

1. Film multicouche de barrière vis-à-vis de l'oxygène comprenant :
a) une partie de microcouches comprenant une pluralité de microcouches, au moins une parmi la pluralité de microcouches comprenant une barrière passive vis-à-vis de l'oxygène comprenant un copolymère d'éthylène et d'alcool vinylique, et au moins une parmi la pluralité de microcouches comprenant une seconde barrière vis-à-vis de l'oxygène ; et
b) une couche massive, chacune des microcouches ayant une épaisseur qui est inférieure à celle de la couche massive ; **caractérisé en ce que** la seconde barrière vis-à-vis de l'oxygène comprend une barrière active vis-à-vis de l'oxygène comprenant un mélange d'une résine thermoplastique (a) présentant des doubles liaisons carbone-carbone essentiellement dans sa chaîne principale, d'un sel de métal de transition (b), et d'un polymère constituant une barrière vis-à-vis de l'oxygène (c), où
la résine thermoplastique (a) comprend au moins l'un des motifs représentés par la formule (I) et la formule II : 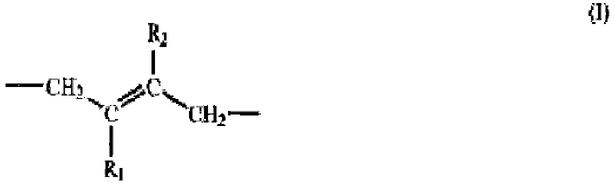 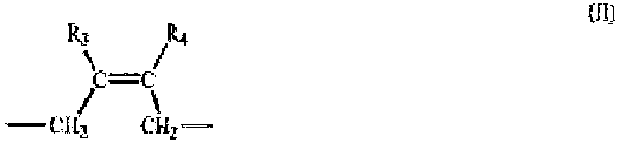 formules dans lesquelles R1, R2, R3 et R4 sont identiques ou différents, et représentent un atome d'hydrogène, un groupe alkyle qui peut être substitué, un groupe aryle qui peut être substitué, un groupe alkylaryle qui peut être substitué, un groupe -COOR5, un groupe -OCOR6, un groupe cyano ou un atome d'halogène, et R3 et R4 peuvent former conjointement un noyau via un groupe méthylène ou un groupe oxyméthylène, où R5 et R6 représentent un groupe alkyle qui peut être substitué, un groupe aryle qui peut être substitué ou un groupe alkylaryle qui peut être substitué, le sel de métal de transition (b) est choisi dans le groupe constitué d'un sel de fer, d'un sel de nickel, d'un sel de cuivre, d'un sel de manganèse, d'un sel de cobalt, et des combinaisons de ceux-ci, et
le polymère constituant une barrière vis-à-vis de l'oxygène (c) est choisi dans le groupe constitué de l'alcool polyvinylique, d'un copolymère d'éthylène et d'alcool vinylique, du polyamide, du chlorure de polyvinyle et de ses copolymères, du dichlorure de polyvinylidène et de ses copolymères, du polyacrylonitrile et de ses copolymères, du naphténate de polyéthylène et de ses copolymères, du téréphtalate de polyéthylène et de ses copolymères, et des combinaisons de ceux-ci.

2. Film selon la revendication 1 dans lequel la partie de microcouches comprend au moins une microcouche comprenant un mélange de la barrière active vis-à-vis de l'oxygène et de la barrière passive vis-à-vis de l'oxygène, et au moins une microcouche comprenant la barrière passive vis-à-vis de l'oxygène.

3. Film selon la revendication 1 dans lequel la partie de microcouches comprend une séquence répétitive de couches représentée par la structure « A/B », dans laquelle « A » représente une série de microcouches comprenant la barrière active vis-à-vis de l'oxygène ; et « B » représente une série de microcouches comprenant la barrière passive vis-à-vis de l'oxygène.

4. Film selon la revendication 3 dans lequel la partie de microcouches comprend entre 10 et 3 000 microcouches agencées dans la séquence répétitive de la revendication 3.

5. Procédé de fabrication d'un film multicouche de barrière vis-à-vis de l'oxygène comprenant :
a. la coextrusion d'une pluralité de microcouches pour former une partie de microcouches, au moins une parmi la pluralité de microcouches comprenant une barrière passive vis-à-vis de l'oxygène comprenant un copolymère d'éthylène et d'alcool vinylique, et au moins une parmi la pluralité de microcouches comprenant une seconde barrière vis-à-vis de l'oxygène ;
b. l'extrusion d'une couche massive, chacune des microcouches ayant une épaisseur qui est inférieure à celle de la couche massive ; et
c. la fusion de ladite couche massive et de ladite partie de microcouches pour former un film multicouche ;
**caractérisé en ce que**
i) la seconde barrière vis-à-vis de l'oxygène comprend une barrière active vis-à-vis de l'oxygène comprenant un mélange d'une résine thermoplastique (a) présentant des doubles liaisons carbone-carbone essentiellement dans sa chaîne principale, d'un sel de métal de transition (b), et d'un polymère constituant une barrière vis-à-vis de l'oxygène (c), où
la résine thermoplastique (a) comprend au moins l'un des motifs représentés par la formule (I) et la formule II : 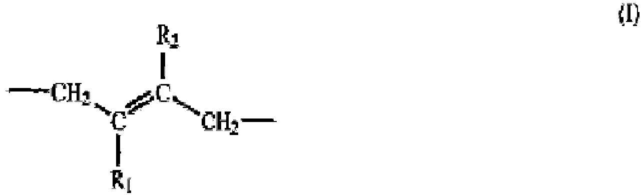 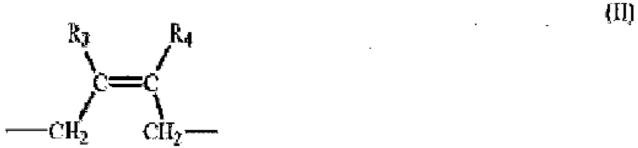 formules dans lesquelles R1, R2, R3 et R4 sont identiques ou différents, et représentent un atome d'hydrogène, un groupe alkyle qui peut être substitué, un groupe aryle qui peut être substitué, un groupe alkylaryle qui peut être substitué, un groupe -COOR5, un groupe -OCOR6, un groupe cyano ou un atome d'halogène, et R3 et R4 peuvent former conjointement un noyau via un groupe méthylène ou un groupe oxyméthylène, où R5 et R6 représentent un groupe alkyle qui peut être substitué, un groupe aryle qui peut être substitué ou un groupe alkylaryle qui peut être substitué, le sel de métal de transition (b) est choisi dans le groupe constitué d'un sel de fer, d'un sel de nickel, d'un sel de cuivre, d'un sel de manganèse, d'un sel de cobalt, et des combinaisons de ceux-ci, et
le polymère constituant une barrière vis-à-vis de l'oxygène (c) est choisi dans le groupe constitué de l'alcool polyvinylique, d'un copolymère d'éthylène et d'alcool vinylique, du polyamide, du chlorure de polyvinyle et de ses copolymères, du dichlorure de polyvinylidène et de ses copolymères, du polyacrylonitrile et de ses copolymères, du naphténate de polyéthylène et de ses copolymères, du téréphtalate de polyéthylène et de ses copolymères, et des combinaisons de ceux-ci ;
ii) la couche massive est extrudée en amenant un premier polymère à travers une plaque de distribution et sur une tige de formation primaire, ladite plaque de distribution comportant un orifice d'entrée de fluide et un orifice de sortie de fluide, l'orifice de sortie de fluide de ladite plaque étant en communication fluide avec ladite tige de formation primaire et étant structuré de manière à ce que ledit premier polymère soit déposé sur ladite tige de formation primaire sous la forme d'une couche massive ;
iii) la pluralité de microcouches est coextrudée pour former une partie de microcouches en amenant au moins un second polymère à travers un ensemble de microcouches, ledit ensemble de microcouches comprenant une pluralité de plaques de distribution de microcouches et une tige de formation de microcouches, chacune desdites plaques de microcouche comportant un orifice d'entrée de fluide et un orifice de sortie de fluide, l'orifice de sortie de fluide de chacune desdites plaques de microcouche étant en communication fluide avec ladite tige de formation de microcouches et étant structuré de manière à déposer une microcouche de polymère sur ladite tige de formation de microcouches, lesdites plaques de microcouche étant agencées de manière à définir un ordre prédéterminé dans lequel les microcouches sont déposées sur ladite tige de formation de microcouches, pour ainsi former une masse fluide en microcouches sensiblement unifiée ;
iv) la couche massive et la partie de microcouches sont fusionnées pour former un film multicouche en amenant ladite masse fluide en microcouches de ladite tige de formation de microcouches sur ladite tige de formation primaire pour fusionner ladite masse fluide en microcouches avec ladite couche massive, pour ainsi former un film multicouche ; et
v) le second polymère comprend la seconde barrière vis-à-vis de l'oxygène.

6. Procédé selon la revendication 5 dans lequel la partie de microcouches comprend au moins une microcouche comprenant un mélange de la barrière active vis-à-vis de l'oxygène et de la barrière passive vis-à-vis de l'oxygène, et au moins une microcouche comprenant la barrière passive vis-à-vis de l'oxygène.

7. Procédé selon la revendication 5 dans lequel la partie de microcouches comprend une séquence répétitive de couches représentée par la structure « A/B », dans laquelle « A » représente une série de microcouches comprenant la barrière active vis-à-vis de l'oxygène ; et « B » représente une série de microcouches comprenant la barrière passive vis-à-vis de l'oxygène.

8. Procédé selon la revendication 7 dans lequel la partie de microcouches comprend entre 10 et 3 000 microcouches agencées dans la séquence répétitive de la revendication 7.

9. Procédé selon l'une quelconque des revendications 5 à 8 dans lequel ladite couche massive est déposée sur ladite tige de formation primaire avant le dépôt de ladite masse fluide en microcouches sur ladite tige de formation primaire de manière à ce que ladite couche massive soit interposée entre ladite masse fluide en microcouches et ladite tige de formation primaire.

10. Procédé selon l'une quelconque des revendications 5 à 9 incluant en outre les étapes suivantes :
opération consistant à amener un troisième polymère à travers une seconde plaque de distribution pour former une seconde couche massive, et
fusion du troisième polymère avec ladite masse fluide en microcouches de manière à ce que ladite seconde couche massive forme une seconde couche externe pour ledit film multicouche.
